# EUROPÄISCHE PATENTSCHRIFT

(11) **EP 2 582 761 B1**
(45) Veröffentlichungstag und Bekanntmachung des Hinweises auf die Patenterteilung: **18.03.2015**
(21) Anmeldenummer: 11725114.0
(22) Anmeldetag: 16.06.2011
(51) Int. Cl.: C09D 4/00, C09J 4/00, C09K 3/00, C09D 133/00

(54) **WÄSSRIGE BINDEMITTELZUSAMMENSETZUNGEN**
AQUEOUS BINDING AGENT COMPOSITIONS
COMPOSITIONS DE LIANTS AQUEUSES

(30) Priorität: 17.06.2010 EP 10166422
(43) Veröffentlichungstag der Anmeldung: 24.04.2013
(73) Patentinhaber: BASF SE, 67056 Ludwigshafen (DE)
(72) Erfinder: AMTHOR, Stephan, 67063 Ludwigshafen (DE); RECK, Bernd, 67269 Grünstadt (DE); HARTIG, Jens, 67063 Ludwigshafen (DE)
(86) Internationale Anmeldenummer: PCT/EP2011/060027
(87) Internationale Veröffentlichungsnummer: WO 2011/157792

(56) Entgegenhaltungen:
- EP-A2- 1 445 292
- WO-A2-2009/101100

## Beschreibung

Die vorliegende Erfindung betrifft wässrige Bindemittelzusammensetzungen auf Basis wässriger Polymerdispersionen, Verfahren zu ihrer Herstellung und ihre Verwendungen.

Wässrige Polymerdispersionen, die beim Verdampfen des wässrigen Dispergiermediums Polymerfilme bilden, haben weite Verbreitung gefunden. Sie dienen beispielsweise als wässrige Bindemittelsysteme in Anstrichfarben, in Lacken, in Papierstreichmassen, in Beschichtungssystemen für Leder, in Beschichtungssystemen für mineralische Formkörper wie Faserzementplatten und Betondachsteine, in Korrosionsschutzgrundierungen (Primer) für Metalle, als Bindemittel bei der Vliesstoffherstellung, als Klebrohstoffe, als Additive für hydraulisch bindende Massen wie Gips oder Beton, als Additive für Ton- oder Lehmbaustoffe, zur Herstellung von Membranen und dergleichen. Die durch Trocknung aus solchen wässrigen Dispersionen erhältlichen festen, teilchen- oder pulverförmigen Polymerzusammensetzungen können ebenfalls eingesetzt werden und dienen darüber hinaus als Additive für eine große Vielzahl von Anwendungsbereichen wie z. B. zur Modifizierung von Kunststoffen, als Zementadditive, als Komponenten für Tonerformulierungen, als Zusatzstoffe in elektrophotographischen Anwendungen und dergleichen. Die Herstellung derartiger wässriger Polymerdispersionen erfolgt typischerweise durch eine radikalische, wässrige Emulsionspolymerisation ethylenisch ungesättigter Monomere.

Es hat sich gezeigt, dass Polymerdispersionen mit vernetzten Polymerketten für viele solcher Anwendungen vorteilhafte Eigenschaften besitzen. Die Vernetzung der Polymerketten kann sowohl während als auch nach der Emulsionspolymerisation erfolgen. Ersteres wird als interne und Letzteres als externe Vernetzung bezeichnet. Beispiele für interne Vernetzung sind radikalische Polymerisationen einfach ungesättigter Monomere in Gegenwart mehrfach ungesättigter Monomere, die als Vernetzungsmittel fungieren. Bei der externen Vernetzung werden in der Regel Polymere, die bestimmte funktionelle oder reaktive Gruppen aufweisen, durch Bestrahlung oder durch Zugabe eines Vernetzungsmittels, das mit den funktionellen/reaktiven Gruppen des Polymers unter Ausbildung einer koordinativen oder kovalenten Bindung reagiert, vernetzt. Die Art des Vernetzungsmittels richtet sich nach der Art der funktionellen Gruppe im Polymer. Beispielsweise können ionische Vernetzungsmittel wie insbesondere Zink- und Calciumsalze zur Vernetzung von Polymeren eingesetzt werden, welche Carboxylgruppen aufweisen. Polymere mit Aldehyd- oder Ketogruppen oder mit Oxirangruppen können beispielsweise mit organischen Verbindungen, die zwei oder mehrere primäre Aminogruppen oder Hydrazidgruppen aufweisen, vernetzt werden. Der Zusatz derartiger Vernetzungsmittel ist jedoch nicht in allen Fällen möglich. Polymere mit Hydroxyl- oder Aminogruppen können beispielsweise mit Di- oder Polyisocyanaten vernetzt werden. Als nachteilig erweist sich, dass die Polymerdispersionen durch den Zusatz des Isocyanat-Vernetzungsmittels instabil werden können. Aufgrund der Irreversibilität der Vernetzungsreaktion ist die Lagerstabilität derartiger Dispersionen beschränkt, und bei Verwendung derartiger Bindemittel kann es daher zu Problemen bei der Anwendung kommen.

Die EP1 419 897 beschreibt Aufzeichnungsmaterialien für Tintenstrahldrucker mit einer die Tinte aufnehmenden Schicht, die ein wasserlösliches oder wasserdispergierbares Polymer umfasst. Das Polymer beinhaltet eine sich wiederholende Monomereinheit, die dazu in der Lage ist, Borsäure mittels einer stickstoffhaltigen funktionellen Gruppe und einer Hydroxylgruppe durch Ausbildung eines 5- oder 6-gliedrigen Rings zu chelatisieren. Die beschriebenen Polymerdispersionen besitzen nur sehr eingeschränkte Anwendungsmöglichkeiten und sind insbesondere als Bindemittel für Anstrichfarben oder für die Faserbindung oder als Klebrohstoff nicht geeignet.

Die US 4,544,699 beschreibt eine Klebstoffzusammensetzung, die eine wässrige Dispersion eines Copolymers, das aus Vinylidenchlorid und einem Monomer mit einer Hydroxylgruppe hergestellt ist sowie ein Vernetzungsmittel enthält, bei dem es sich um Borsäure oder Salze der Borsäure handeln kann. Die Zusammensetzungen sind aufgrund des hohen Anteils an Vinylidenchlorid und der Beschränkung auf durch Hydroxylgruppen vermittelte Vernetzung nur für sehr spezielle Klebstoffanwendungen geeignet.

EP 1445292 und WO 2009/101100 beschreiben Polymerdispersionen und daraus hergestellte Bindemittel.

Der vorliegenden Erfindung liegt die Aufgabe zu Grunde, auf wässrigen Polymerdispersionen basierende Bindemittel mit verbesserten anwendungstechnischen Eigenschaften zur Verfügung zu stellen.

Überraschenderweise wurde gefunden, dass diese und weitere Aufgaben durch Bindemittelzusammensetzungen auf Basis wässriger Polymerdispersionen gelöst werden, deren Polymere geringe Mengen, z. B. 0,1 bis 10 Gew.-%, bezogen auf das Polymer, monoethylenisch ungesättigte Monomere mit vicinalen Hydroxylfunktionen und/oder Monomere mit funktionellen Gruppen, aus denen durch Hydrolyse vicinale Hydroxylgruppen freigesetzt werden können, wenn die Bindemittelzusammensetzung Borsäure und/oder ein Borsäuresalz umfassen.

Ein erster Gegenstand der Erfindung ist daher eine wässrige Bindemittelzusammensetzung gemäß Ansprüche 1-12, enthaltend
a) ein wasserunlösliches Polymer P in Form dispergierter Polymerpartikel, das erhältlich ist durch Polymerisation ethylenisch ungesättigter Monomere M, wobei die Monomere M umfassen:
   - 90 bis 99,9 Gew.-%, bezogen auf die Gesamtmenge an Monomeren M, wenigstens eines gering wasserlöslichen neutralen monoethylenisch ungesättigten Monomers M1; und
   - 0,1 bis 10 Gew.-%, bezogen auf die Gesamtmenge an Monomeren M, wenigstens eines monoethylenisch ungesättigten Monomers M2, das ausgewählt ist unter monoethylenisch ungesättigten Monomeren, die wenigstens zwei an vicinale C-Atome gebundene Hydroxylgruppen aufweisen, und monoethylenisch ungesättigten Monomeren, die eine funktionale Gruppen tragen, welche durch Hydrolyse in zwei an vicinale C-Atome gebundene Hydroxylgruppen überführt werden können;
      und
b) Borsäure und/oder wenigstens ein Salz der Borsäure;
   wobei das wenigstens eine Monomer M1 ausgewählt ist unter Estern und Diestern monoethylenisch ungesättigter C₃-C₈-Mono- und C₄-C₈-Dicarbonsäuren mit C₁-C₃₀-Alkanolen, Estern von Vinyl- oder Allylalkohol mit C₁-C₃₀-Mono-carbonsäuren, Vinylaromaten, Amiden und Diamiden, monoethylenisch ungesättigter C₃-C₈-Mono- und C₄-C₈-Dicarbonsäuren mit C₁-C₃₀-Alkylaminen oder Di-C₁-C₃₀-alkylaminen und Mischungen davon.

Die in den erfindungsgemäßen Bindemittelzusammensetzungen enthaltenen Polymere und wässrigen Polymerdispersionen sind neu, wenn die Monomere M2 unter monoethylenisch ungesättigten Monomeren, die wenigstens zwei an vicinale C-Atome gebundene Hydroxylgruppen aufweisen, ausgewählt sind.

Dementsprechend betrifft die vorliegende Erfindung auch wässrige Polymerdispersionen gemäß Ansprüche 13-17 eines in Wasser unlöslichen Polymers (P), das erhältlich ist durch Polymerisation ethylenisch ungesättigter Monomere M, wobei die Monomere M umfassen:
- 90 bis 99,9 Gew.-%, bezogen auf die Gesamtmenge an Monomeren M, wenigstens eines gering wasserlöslichen neutralen monoethylenisch ungesättigten Monomers M1, das ausgewählt ist unter Estern und Diestern monoethylenisch ungesättigter C₃-C₈-Mono- und C₄-C₈-Dicarbonsäuren mit C₁-C₃₀-Alkanolen, Estern von Vinyl- oder Allylalkohol mit C₁-C₃₀-Monocarbonsäuren, Vinylaromaten, Amiden und Diamiden monoethylenisch ungesättigter C₃-C₈-Mono- und C₄-C₈-Dicarbonsäuren mit C₁-C₃₀-Alkylaminen oder Di-C₁-C₃₀-alkylaminen und Mischungen davon; und
- 0,1 bis 10 Gew.-%, bezogen auf die Gesamtmenge an Monomeren M, wenigstens eines monoethylenisch ungesättigten Monomers M2, das ausgewählt ist unter monoethylenisch ungesättigten Monomeren, die wenigstens zwei an vicinale C-Atome gebundene Hydroxylgruppen aufweisen.

Alle Ausführungen, die zu dem Polymer (P) und den Monomeren M, aus denen das Polymer (P) aufgebaut ist, gemacht werden, beziehen sich sowohl auf die wässrige Bindemittelzusammensetzung, welche Borsäure oder Borsäuresalze enthält, als auch-auf die wässrige Polymerdispersion des Polymeren (P) und auf feste Bindemittelzusammensetzungen, die das Polymer (P) in Form eines Pulvers sowie Borsäure und/oder wenigstens ein Salz der Borsäure enthält.

Ein weiterer Gegenstand der Erfindung ist eine feste Bindemittelzusammensetzung, die ein wasserunlösliches Polymer (P), wie hier und im Folgenden definiert, in Form eines Pulvers sowie Borsäure und/oder wenigstens ein Salz der Borsäure enthält.

Die erfindungsgemäßen Bindemittelzusammensetzungen eignen sich für eine Vielzahl von Anwendungen, in denen Bindemittelzusammensetzungen auf Basis wässriger Polymerdispersionen eingesetzt werden. So eignen sich die erfindungsgemäßen Bindemittelzusammensetzungen als Bindemittel zur Verfestigung von Vliesstoffen und führen dort zu einer hohen Flexibilität bei gleichzeitig verbesserter Wasserbeständigkeit. Bei Verwendung als Bindemittel in Beschichtungsmitteln führen sie zu einer erhöhten Blockfestigkeit der Beschichtung, die auch bei erhöhter Temperatur erhalten bleibt, ohne dass die Flexibilität der Beschichtung nennenswert abnimmt. Durch die Verwendung der erfindungsgemäßen Bindemittelzusammensetzungen als Klebrohstoffe können zudem Klebstoffe mit in der Regel guten und vorteilhaft aufeinander abgestimmten Adhäsions- und Kohäsionseigenschaften erhalten werden, die auch als Ein-Komponenten-Formulierungen hohe Lagerstabilität aufweisen. Weiterhin verleihen die erfindungsgemäßen Bindemittelzusammensetzungen hydraulischen Bindemitteln wie Zemente und Gips, sowie den daraus hergestellten hydraulisch abbindenden Zusammensetzung wie Beton, Mörtel und Zementbeschichtungen, verbesserte Materialeigenschaften, insbesondere verbesserte Festigkeit, wie Zug- und Reißfestigkeit, und ermöglichen Anstrichbeschichtungen mit hoher Haftung und guter Abriebfestigkeit.

Demzufolge betrifft ein weiterer Gegenstand der vorliegenden Erfindung die Verwendung von Bindemittelzusammensetzungen, wie zuvor definiert, in Beschichtungsmitteln, insbesondere in Anstrichmitteln, Druckfarben und Textilbeschichtungen.

Ein weiterer Gegenstand der vorliegenden Erfindung betrifft die Verwendung von Bindemittelzusammensetzungen, wie zuvor definiert, in Klebstoffen.

Ein weiterer Gegenstand der vorliegenden Erfindung betrifft die Verwendung von Bindemittelzusammensetzungen, wie zuvor definiert, in Dichtmassen.

Ein weiterer Gegenstand der vorliegenden Erfindung betrifft die Verwendung von Bindemittelzusammensetzungen, wie zuvor definiert, für die Anwendung in hydraulisch abbindenden Bindemitteln, wie Gips oder Zement, insbesondere zur Anwendung in Zement, d. h. als modifizierendes Additiv in anorganischen, hydraulisch abbindenden Bindemitteln, insbesondere in Zement und den daraus hergestellten Bindebaustoffen, wie Beton, Mörtel und Zementbeschichtungen.

Ein weiterer Gegenstand der vorliegenden Erfindung betrifft die Verwendung von Bindemittelzusammensetzungen, wie zuvor definiert, zur Herstellung von polymerverfestigten Faservliesen bzw. Vliesstoffen.

Weitere Gegenstände der Erfindung betreffen die Verwendungen von Borsäure und/oder wenigstens eines Salzes der Borsäure zur Modifizierung der Eigenschaften einer polymergebundenen Beschichtung, die als Bindemittel ein wasserunlösliches Polymer (P) enthält sowie die Verwendung von Borsäure und/oder wenigstens eines Salzes der Borsäure zur Modifizierung der Eigenschaften eines Klebstoffs, der ein wasserunlösliches Polymer (P) enthält.

Besagte wasserunlösliche Polymere (P) liegen in den Bindemittelzusammensetzungen sowie in den zur Herstellung der Beschichtungen verwendeten Beschichtungsmitteln bzw. in den Klebstoffen in Form dispergierter Polymerpartikel vor. Die wasserunlöslichen Polymere (P) sind typischerweise durch radikalische, wässrige Emulsionspolymerisation ethylenisch ungesättigter Monomere M erhältlich, wobei die Monomere M die zuvor und im Folgenden genannten Monomere in den dort angegebenen Mengen umfassen.

Ein weiterer Gegenstand der Erfindung betrifft Verfahren zur Herstellung der erfindungsgemäßen Bindemittelzusammensetzungen, umfassend die Schritte
A) Herstellung einer wässrigen Dispersion eines wasserunlöslichen Polymers (P) durch Polymerisation ethylenisch ungesättigter Monomere M; und
B) Zugabe von Borsäure und/oder wenigstens eines Salzes der Borsäure zu der in Schritt A) erhaltenen Polymerdispersion nach oder während deren Herstellung.

Weitere Gegenstände der Erfindung sind die im Folgenden beschriebenen Beschichtungsmittel, insbesondere Anstrichmittel, Druckfarben und Beschichtungsmittel für Textilien sowie Klebstoffe, Dichtmassen, anorganische, hydraulisch abbindende Bindemittelzusammensetzungen und Vliesstoffe, die eine erfindungsgemäße Bindemittelzusammensetzung enthalten.

Im Rahmen der vorliegenden Erfindung umfasst der Ausdruck "Alkyl" geradkettige und verzweigte Alkylgruppen, speziell mit 1 bis 30 Kohlenstoffatomen, d. h. für "C₁-C₃₀-Alkyl".

Geeignete kurzkettige Alkylgruppen sind beispielsweise geradkettige oder verzweigte C₁-C₇-Alkyl-, bevorzugt C₁-C₆-Alkyl- und besonders bevorzugt C₁-C₄-Alkylgruppen. Dazu zählen insbesondere Methyl, Ethyl, Propyl, Isopropyl, n-Butyl, 2-Butyl, sec.-Butyl, tert.-Butyl, n-Pentyl, 2-Pentyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 2-Hexyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 2-Heptyl, 3-Heptyl, 2-Ethylpentyl, 1-Propylbutyl etc.

Geeignete längerkettige Alkylgruppen sind beispielsweise geradkettige und verzweigte C₈-C₃₀-Alkylgruppen, bevorzugt C₈-C₂₀-Alkylgruppen. Bevorzugt handelt es sich dabei um überwiegend lineare Alkylreste, wie sie auch in natürlichen oder synthetischen Fettsäuren und Fettalkoholen sowie Oxoalkoholen vorkommen. Dazu zählen beispielsweise n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl und n-Nonadecyl. Der Ausdruck Alkyl umfasst unsubstituierte und substituierte Alkylreste.

Die vorstehenden Ausführungen zu Alkyl gelten sinngemäß auch für die Alkylgruppen in Alkanol, Alkylamin und Alkancarbonsäuren.

Der Ausdruck "Alkylen" steht im Rahmen der vorliegenden Erfindung für geradkettige oder verzweigte Alkandiyl-Gruppen mit 1 bis 7 Kohlenstoffatomen, wie beispielsweise Methylen, 1,2-Ethylen, 1,2-Propylen, 1,3-Propylen, 1,2-Butylen, 1,3-Butylen, 1,4-Butylen, 2-Methyl-1,2-propylen, etc.

Die erfindungsgemäße Bindemittelzusammensetzung enthält ein wasserunlösliches Polymer (P). Im Falle einer wässrigen Zusammensetzung liegt dies in Form von Polymerpartikeln, welche in einer wässrigen Phase dispergiert sind, d. h. in Form einer wässrigen Polymerdispersion, vor. Im Falle einer festen Zusammensetzung liegt das Polymer (P) in Form eines Pulvers vor, worin die Pulverpartikel das Polymer (P) enthalten.

Die Polymere (P) sind durch radikalische Polymerisation ethylenisch ungesättigter Monomere M erhältlich. Die das Polymer P konstituierenden Monomere M umfassen wenigstens ein gering wasserlösliches, neutrales monoethylenisch ungesättigtes Monomer M1 und wenigstens ein monoethylenisch ungesättigtes Monomer M2, das ausgewählt ist unter monoethylenisch ungesättigten Monomeren, die wenigstens zwei, an vicinale C-Atome gebundene Hydroxylgruppen aufweisen und monoethylenisch ungesättigten Monomeren, die eine funktionale Gruppen tragen, welche durch Hydrolyse in zwei an vicinale C-Atome gebundene Hydroxylgruppen überführt werden können.

Unter Borsäure wird im Rahmen dieser Erfindung die monomere Borsäure (ortho-Borsäure B(OH)₃) sowie deren oligomere Kondensationsprodukte (meta-Borsäuren), insbesondere Diborsäure, Triborsäure, Cyclotriborsäure, Tetraborsäure, Pentaborsäure, Hexaborsäure, Octaborsäure, Dekaborsäure, Dodekaborsäure und höhere Oligomere mit in der Regel bis zu 20 Boratomen, verstanden. Unter Borsäuresalzen, im Folgenden auch Borate genannt, werden hier entsprechend die Salze der monomeren Borsäure (ortho-Borate) sowie die Salze oligomerer Borsäuren (meta-Borate) verstanden, insbesondere deren Alkali-, Erdalkali-, Ammonium-, Alkylammonium- und Hydroxyalkylammoniumsalze, die gegebenenfalls weitere Anionen, wie etwa Halogenide enthalten können, z. B. die Diborate, Triborate, Cyclotriborate, Tetraborate, Pentaborate, Hexaborate, Octaborate, Dekaborate, Dodekaborate, die in wasserfreier Form oder in Hydrat-Form vorliegen können. Unter einem Alkylammoniumsalz wird hier ein Mono-, Di-, Tri- oder Tetraalkylammoniumsalz verstanden, dessen Alkylreste unabhängig voneinander 1 bis 10 und bevorzugt 1 bis 4 C-Atome haben. Unter einem Hydroxyalkylammoniumsalz wird hier ein Mono-, Di-, Tri- oder Tetraalkylammoniumsalz verstanden, dessen Alkylreste 1 bis 10 und bevorzugt 1 bis 4 C-Atome haben, wobei ein oder mehrere Alkylreste wenigstens eine Hydroxylgruppe tragen.

Unter Monomeren M1 mit geringer Wasserlöslichkeit versteht man in der Regel solche Monomeren, deren Löslichkeit in entionisiertem Wasser bei 25 °C und 1 bar 60 g/l und insbesondere 30 g/l nicht überschreitet und typischerweise im Bereich von 0,1 bis 30 g/l (25 °C, 1 bar) liegt.

Die Monomere M1 sind neutral, d. h. sie werden im Wässrigen weder protoniert noch wirken sie als Säure.

Das Monomer M1 sind monoethylenisch ungesättigt, d. h. sie weisen genau eine ethylenisch ungesättigte C=C-Doppelbindung auf. Die Monomere M1 sind vorzugsweise ausgewählt unter Estern und Diestern monoethylenisch ungesättigter C₃-C₈-Mono- und C₄-C₈-Dicarbonsäuren mit C₁-C₃₀-Alkanolen, insbesondere mit C₁-C₁₀-Alkanolen, Estern von Vinyl- oder Allylalkohol mit C₁-C₃₀-Monocarbonsäuren, Vinylaromaten, Amiden und Diamiden, monoethylenisch ungesättigter C₃-C₈-Mono- und C₄-C₈-Dicarbonsäuren mit C₁-C₃₀-Alkylaminen oder Di-C₁-C₃₀-alkylaminen, insbesondere mit C₁-C₁₀-Alkylaminen oder Di-C₁-C₁₀-alkylaminen, und Mischungen davon.

Der Begriff "monoethylenisch ungesättigte C₃-C₈-Monocarbonsäure" steht für eine einwertige Carbonsäure mit 3 bis 8 C-Atomen, die eine ethylenisch ungesättigte C=C-Doppelbindung aufweist, z. B. für Acrylsäure, Methacrylsäure, Vinylessigsäure oder Crotonsäure.

Der Begriff "monoethylenisch ungesättigte C₄-C₈-Dicarbonsäure" steht für eine zweiwertige Carbonsäure mit 4 bis 8 C-Atomen, die eine ethylenisch ungesättigte C=C-Doppelbindung aufweist, z. B. für Maleinsäure, Fumarsäure, Itaconsäure oder Citraconsäure.

Weitere geeignete Monomere M1 sind beispielsweise Vinylhalogenide, Vinylidenhalogenide und Mischungen davon.

Geeignete Ester und Diester monoethylenisch ungesättigter C₃-C₈-Mono- und C₄-C₈-Dicarbonsäuren mit C₁-C₃₀-Alkanolen, insbesondere mit C₁-C₁₀-Alkanolen, sind vor allem die Ester monoethylenisch ungesättigter C₃-C₈-Monocarbonsäuren, insbesondere die Ester der Acrylsäure und die Ester der Methacrylsäure mit C₁-C₃₀-Alkanolen, insbesondere mit C₁-C₁₀-Alkanolen, wie Methyl(meth)acrylat, Methylethacrylat, Ethyl(meth)acrylat, Ethylethacrylat, n-Propyl(meth)acrylat, Isopropyl(meth)acrylat, n-Butyl(meth)acrylat, sec.-Butyl(meth)acrylat, tert.-Butyl(meth)acrylat, tert.-Butylethacrylat, n-Hexyl(meth)acrylat, n-Heptyl(meth)acrylat, n-Octyl(meth)acrylat, 1,1,3,3-Tetramethylbutyl(meth)acrylat, Ethylhexyl(meth)acrylat, n-Nonyl(meth)acrylat, n-Decyl(meth)acrylat, n-Undecyl(meth)acrylat, Tridecyl(meth)acrylat, Myristyl(meth)acrylat, Pentadecyl(meth)acrylat, Palmityl(meth)acrylat, Heptadecyl(meth)acrylat, Nonadecyl(meth)acrylat, Arachinyl(meth)acrylat, Behenyl(meth)acrylat, Lignoceryl(meth)acrylat, Cerotinyl(meth)acrylat, Melissinyl(meth)acrylat, Palmitoleinyl(meth)acrylat, Oleyl(meth)acrylat, Linolyl(meth)acrylat, Linolenyl(meth)acrylat, Stearyl(meth)acrylat und Lauryl(meth)acrylat, aber auch die Diester monoethylenisch ungesättigter C₄-C₈-Dicarbonsäuren, insbesondere die Diester der Maleinsäure mit C₁-C₃₀-Alkanolen wie Dimethylmaleat, Diethylmaleat, Di-(n-propyl)-maleat, Diisopropylmaleat, Di-(n-butyl)-maleat, Di-(n-hexyl)-maleat, Di-(1,1,3,3-tetramethylbutyl)-maleat, Di-(n-nonyl)-maleat, Ditridecylmaleat, Dimyristylmaleat, Dipentadecylmaleat, Dipalmitylmaleat, Diarachinylmaleat und Mischungen davon. Der Begriff "(meth)acrylat" umfasst dabei sowohl den entsprechenden Ester der Acrylsäure wie auch den entsprechenden Ester der Methacrylsäure.

Geeignete Ester von Vinylalkohol und Allylalkohol mit C₁-C₃₀-Monocarbonsäuren sind z. B. Vinylformiat, Vinylacetat, Vinylpropionat, Vinylbutyrat, Vinyllaurat, Vinylstearat, Versaticsäurevinylester, Allylformiat, Allylacetat, Allylpropionat, Allylbutyrat, Allyllaurat und Mischungen davon.

Geeignete Vinylaromaten sind Styrol, 2-Methylstyrol, 4-Methylstyrol, 2-(n-Butyl)styrol, 4-(n-Butyl)styrol, 4-(n-Decyl)styrol, insbesondere Styrol.

Geeignete Amide und Diamide monoethylenisch ungesättigter C₃-C₈-Mono- und C₄-C₈-Dicarbonsäuren mit C₁-C₃₀-Alkylaminen oder Di-C₁-C₃₀-alkylaminen, insbesondere mit C₁-C₁₀-Alkylaminen oder Di-C₁-C₁₀-alkylaminen, sind vor allem die Amide der Acrylsäure und der Methacrylsäure mit C₁-C₃₀-Alkylaminen oder Di-C₁-C₃₀-alkylaminen, insbesondere mit C₁-C₁₀-Alkylaminen oder Di-C₁-C₁₀-alkylaminen, wie z. B. N-Methyl(meth)acrylamid, N-Ethyl(meth)acrylamid, N-Propyl(meth)acrylamid, N-(n-Butyl)(meth)acrylamid, N-(tert.-Butyl)(meth)acrylamid, N-(n-Octyl)(meth)acrylamid, N-(1,1,3,3-Tetramethylbutyl)(meth)acrylamid, N-Ethylhexyl(meth)acrylamid, N-(n-Nonyl)(meth)acrylamid, N-(n-Decyl)(meth)acrylamid, N-(n-Undecyl)(meth)acrylamid, N-Tridecyl(meth)acrylamid, N-Myristyl(meth)acrylamid, N-Pentadecyl(meth)acrylamid, N-Palmityl(meth)acrylamid, N-Heptadecyl(meth)acrylamid, N-Nonadecyl(meth)acrylamid, N-Arachinyl(meth)acrylamid, N-Behenyl(meth)acrylamid, N-Lignoceryl(meth)acrylamid, N-Cerotinyl(meth)acrylamid, N-Melissinyl(meth)acrylamid, N-Palmitoleinyl(meth)acrylamid, N-Oleyl(meth)acrylamid, N-Linolyl(meth)acrylamid, N-Linolenyl(meth)acrylamid, N-Stearyl(meth)acrylamid, N-Lauryl(meth)acrylamid, N,N-Dimethyl(meth)acrylamid, N,N-Diethyl(meth)acrylamid, aber auch die Diamide und Imide der Maleinsäure mit C₁-C₃₀-Alkylaminen oder Di-C₁-C₃₀-alkylaminen, insbesondere mit C₁-C₁₀-Alkylaminen oder Di-C₁-C₁₀-alkylaminen, wie z. B.N,N'-Dimethylmaleinsäurediamid, N,N'-Diethylmaleinsäurediamid, N,N'-Dipropylmaleinsäurediamid, N,N'-Di-(tert.-butyl)-maleinsäurediamid, N,N'-Di-(n-octyl)-maleinsäurediamid, N,N'-Di-(n-nonyl)-maleinsäurediamid, N,N'-Ditridecylmaleinsäurediamid, N,N'-Dimyristylmaleinsäurediamid, N,N,N',N'-Tetramethylmaleinsäurediamid, N,N,N',N'-Tetraethylmaleinsäurediamid und Mischungen davon. Der Begriff "(meth)acrylamid" umfasst dabei sowohl das entsprechende Amid der Acrylsäure wie auch das entsprechende Amid der Methacrylsäure.

Geeignete Vinylhalogenide und Vinylidenhalogenide sind Vinylchlorid, Vinylidenchlorid, Vinylfluorid, Vinylidenfluorid und Mischungen davon.

Vorzugsweise ist das wenigstens eine Monomer M1 ausgewählt unter den Estern monoethylenisch ungesättigter C₃-C₈-Monocarbonsäuren, insbesondere den Estern der Acrylsäure (Acrylate) und den Estern der Methacrylsäure (Methacrylate), mit C₁-C₁₀-Alkanolen und Vinylaromaten, insbesondere unter C₁-C₁₀-Alkylacrylaten und C₁-C₁₀-Alkylmethacrylaten und Vinylaromaten, die teilweise durch C₂-C₁₀-Alkenylcarbonsäurenitrile wie Acrylnitril oder Metacrylnitril ersetzt sein können, und speziell unter Methylacrylat, Ethylacrylat, n-Proplyacrylat, Isopropylacrylat, n-Butylacrylat, tert.-Butylacrylat, 2-Butylacrylat, Isobutylacrylat, 2-Ethylhexylacrylat, Methylmethacrylat, n-Butylmethacrylat, tert.-Butylmethacrylat, Styrol das teilweise durch Acrylnitril ersetzt sein kann.

Entsprechend einer bevorzugten Ausführungsform der Erfindung umfasst das Polymer (P) in einpolymerisierter Form wenigstens ein Monomer M1 und insbesondere wenigstens zwei Monomere M1, die ausgewählt sind unter Estern monoethylenisch ungesättigter C₃-C₈-Monocarbonsäuren, insbesondere den Estern der Acrylsäure und der Methacrylsäure, mit C₁-C₃₀-Alkanolen, insbesondere mit C₁-C₁₀-Alkanolen, und Vinylaromaten. Entsprechend einer besonders bevorzugten Ausführungsform enthält das Polymer (P) in einpolymerisierter Form wenigstens ein Monomer M1.1 und wenigstens ein Monomer M1.2, wobei das wenigstens eine Monomer M1.1 ausgewählt ist unter C₁-C₁₀-Alkylacrylaten und vorzugsweise unter Methylacrylat, Ethylacrylat, n-Proplyacrylat, Isopropylacrylat, n-Butylacrylat, 2-Butylacrylat, Isobutylacrylat, tert.-Butylacrylat und 2-Ethylhexylacrylat, und wobei das wenigstens ein Monomer M1.2 ausgewählt ist unter C₁-C₁₀-Alkylmethacrylaten und Vinylaromaten und vorzugsweise unter Methylmethacrylat, n-Butylmethacrylat, tert.-Butylmethacrylat und Styrol.

Erfindungsgemäß liegt der Anteil der Monomere M1, bezogen auf die Gesamtmenge der Monomere M, im Bereich von 90 bis 99,9 Gew.-%, insbesondere im Bereich von 92 bis 99,8 Gew.-% und besonders bevorzugt im Bereich von 93 bis 99,5 Gew.-%.

Weiterhin sind für eine Reihe von Anwendungen solche Polymere (P) bevorzugt, bei denen das Gewichtsverhältnis einpolymerisierter Monomere M1.1 und M1.2, d. h. das Gewichtsverhältnis M1.1 : M1.2 im Bereich von 25 : 1 bis 1 : 20, vorzugsweise im Bereich von 15 : 1 bis 1 : 10 und speziell im Bereich von 5 : 1 bis 1 : 3 liegt. Insbesondere sind hierfür Polymere (P) bevorzugt, die 50 bis 100 Gew.-% und vorzugsweise 80 bis 100 Gew.-% Monomere M1.1 sowie 0 bis 50 Gew.-% und vorzugsweise 0 bis 20 Gew.-% Monomere M1.2 in einpolymerisierter Form enthalten.

Die Monomere M2 sind bevorzugt ausgewählt unter monoethylenisch ungesättigten Monomeren, die wenigstens zwei an vicinale C-Atome gebundene Hydroxylgruppen aufweisen. Hierzu zählen grundsätzlich alle monoethylenisch ungesättigten Monomere, die neben einer C=C-Doppelbindung, die vorzugsweise als eine über ein Heteroatom wie Sauerstoff oder Stickstoff gebundene Acrylgruppe (-C(O)-CH=CH₂), Methacrylgruppe, (C(O)-C(CH₃)=CH₂), Maleinylgruppe (-C(O)-CH=CH-CO₂H), Allylgruppe (-CH₂C(CH₃)=CH₂), Methallylgruppe (-CH₂C(CH₃)=CH₂) oder Vinylgruppe (-CH=CH₂) vorliegt, wenigstens eine Strukturelement der Formel -CH(OH)-CH(OH)- aufweisen. Hierunter sind solche Monomere bevorzugt, in denen das Strukturelement Bestandteil der Reste der folgenden Formeln Z¹ oder Z² ist: 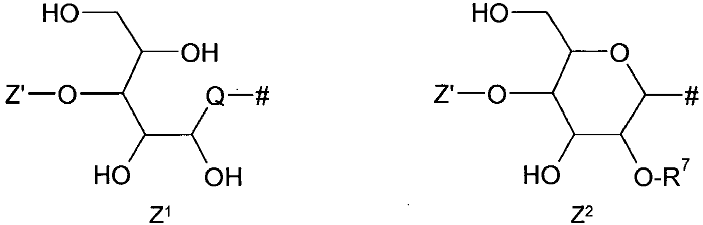 worin
- Q: für C(O) oder CH₂ steht
- Z': für Wasserstoff oder einen Mono- oder Oligosaccharid-Rest, insbesondere für Wasserstoff oder einen Monosaccharid-Rest, z. B. einen Glycosylrest, und speziell für Wasserstoff steht und
- R⁷: Wasserstoff oder Methyl bedeutet.

In einer bevorzugten Ausführungsform sind die Monomere M2 unter Monomeren der allgemeinen Formel I ausgewählt: 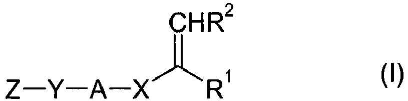 worin
- R¹: für Wasserstoff oder Methyl steht;
- R²: für Wasserstoff oder COOH steht;
- X: für O, NR³, CH₂O, CH₂NR³, C(=O)O oder C(O)NR⁴ steht, wobei das Kohlenstoffatom in den 4 zuletzt genannten Resten an das Kohlenstoffatom gebunden ist, welches R¹ trägt, worin R³ für Wasserstoff, C₁-C₄-Alkyl oder eine Gruppe Z-Y-A steht und R⁴ Wasserstoff, C₁-C₄-Alkyl bedeutet;
- A: für C₂-C₂₀-Alkylen oder eine Gruppe -R⁵-O-[-R⁵-O-]ₓ-C₂-C₂₀-Alkylen steht, worin R⁵ für CH₂CH₂ oder C₃H₆ steht und x für eine ganze Zahl von 0 bis 20 steht;
- Y: für eine chemische Bindung, O oder NR⁶ steht, worin R⁶ Wasserstoff oder C₁-C₄-Alkyl bedeutet; oder
- A-Y: eine chemische Bindung oder CH₂ bedeutet; und
- Z: für einen Rest der Formeln Z¹ oder Z² wie zuvor definiert steht.

In Formel I haben vorzugsweise X, A und Y alleine oder insbesondere gemeinsam eine der folgenden Bedeutungen:
- X: O, NH, N-CH₃, CH₂O, CH₂NH, CH₂NCH₃, C(=O)O, C(O)NH, C(O)NCH₃ oder C(O)N-(CH₂)ₙ-NH-Z, wobei Z eine der zuvor genannten Bedeutungen aufweist und n für 2, 3 oder 4 steht und wobei das Kohlenstoffatom in den 7 zuletzt genannten Resten an das Kohlenstoffatom gebunden ist, welches R¹ trägt;
- A: C₂-C₆-Alkylen, insbesondere (CH₂)ₘ, worin m für 2, 3 oder 4 steht;
- Y: eine chemische Bindung, O oder NR^{6'}, worin R^{6'} Wasserstoff oder Methyl bedeutet; oder
- A-Y: eine chemische Bindung oder CH₂ bedeutet.

Die als Monomer M2 bevorzugten monoethylenisch ungesättigten Verbindungen der Formel I sind bekannt oder können analog den von Park et al., in J. Biomed Mater. Res. A, 2004, 71, 497-507 oder J. Biotechnol. 2004, 107, 151-160, oder nach den in US 2,084,626, DE 1 048 574, PCT/EP 2010/054208, PCT/EP 2010/054211 und WO 90/10023 beschriebenen Methoden hergestellt werden.

Beispiele für besonders bevorzugte Monomere M2 sind N-Allylgluconamid, N-Allylaminoglucose, 2-(N-Gluconylamino)ethylvinylether, 3-(N-Gluconylamino)propylvinylether, N-[2-(Gluconylamino)ethyl]maleinsäureamid, N-[3-(Gluconylamino)propyl]maleinsäureamid, N-[2-(Gluconylamino)ethyl-N'-methyl]maleinsäureamid, N-[3-(Gluconylamino)propyl-N'-methylmaleinsäureamid, N,N-Bis-[2-(gluconylamino)ethyl]maleinsäureamid, N,N-Bis-[3-(gluconylamino)propyl]-maleinsäureamid, N-[2-(Acrylamido)ethyl]gluconamid, N-[2-(Methacrylamido)-ethyl]gluconamid, N-[3-(Acrylamido)propyl]gluconamid, N-[3-(Methacrylamido)-propyl]gluconamid, N-Methylglucaminoacrylamid, N-Methylglucaminomethacrylamid, N-Methylaminoglucoseacrylamid, N-Methylaminoglucosemethacrylamid, N-Maltoyl-N-methylacrylamid, N-Maltoyl-N-methylmethacrylamid, N-Allyllactobionamid, N-Allylmaltobionamid, N-Allylaminomaltose, N-Allylaminooligomaltose, Glycidylmethacrylat, Glycidylacrylat und 1-Methacrylamido-2-D-gluconylaminoethan.

In einer besonders bevorzugten Ausführungsform sind die Monomere M2 unter Monomeren der allgemeinen Formel Ia ausgewählt: 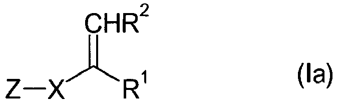 worin R¹, R², X und Z die zuvor genannten Bedeutungen aufweisen und worin R¹ insbesondere für Wasserstoff steht, und worin X vorzugsweise eine der folgenden Bedeutungen aufweist:
X O, NH, N-CH₃, CH₂O, CH₂NH, CH₂NCH₃, C(=O)O, C(O)NH oder C(O)NCH₃ wobei das Kohlenstoffatom in den 6 zuletzt genannten Resten an das Kohlenstoffatom gebunden ist, welches R¹ trägt.

Monomere der Formel la sind beispielsweise N-Allylgluconamid, N-Allylaminoglucose, N-Methylglucaminoacrylamid, N-Methylglucaminomethacrylamid, N-Methylaminoglucoseacrylamid, N-Methylaminoglucosemethacrylamid, N-Maltoyl-N-methylacrylamid, N-Maltoyl-N-methylmethacrylamid, N-Allyllactobionamid, N-Allylmaltobionamid, N-Allylaminomaltose, N-Allylaminooligomaltose.

In einer ebenfalls bevorzugten Ausführungsform sind die Monomere M2 unter Monomeren der allgemeinen Formel Ib ausgewählt: 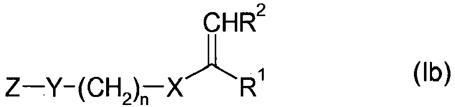 worin n für 2, 3 oder 4 steht und worin R¹, R², X, Y und Z die zuvor genannten Bedeutungen aufweisen, worin R¹ insbesondere für Wasserstoff steht, und worin X und Y alleine oder insbesondere gemeinsam eine der folgenden Bedeutungen aufweisen:
X O, NH, N-CH₃, CH₂O, CH₂NH, CH₂NCH₃, C(=O)O, C(O)NH, C(O)NCH₃ oder C(O)N-(CH₂)ₙ-NH-Z, wobei Z eine der zuvor genannten Bedeutungen aufweist und n für 2, 3 oder 4 steht und wobei das Kohlenstoffatom in den 7 zuletzt genannten Resten an das Kohlenstoffatom gebunden ist, welches R¹ trägt;
Y eine chemische Bindung, O oder NR^{6'}, worin R^{6'} Wasserstoff oder Methyl bedeutet.

Beispiele für besonders bevorzugte Monomere der Formel Ib sind 2-(N-Gluconylamino)ethylvinylether, 3-(N-Gluconylamino)propylvinylether, N-[2-(Gluconylamino)ethyl]maleinsäureamid, N-[3-(Gluconylamino)propyl]maleinsäureamid, N-[2-(Gluconylamino)ethyl-N'-methyl]maleinsäureamid, N-[3-(Gluconylamino)propyl-N'-methylmaleinsäureamid, N,N-Bis-[2-(gluconylamino)ethyl]maleinsäureamid, N,N-Bis-[3-(gluconylamino)propyl]maleinsäureamid, N-[2-(Acrylamido)ethyl]-gluconamid, N-[2-(Methacrylamido)ethyl]gluconamid, N-[3-(Acrylamido)propyl]-gluconamid, N-[3-(Methacrylamido)propyl]gluconamid und 1-Methacrylamido-2-D-gluconylaminoethan.

Zu den Monomeren M2 zählen grundsätzlich weiterhin alle monoethylenisch ungesättigten Monomere, die neben einer C=C-Doppelbindung, die vorzugsweise als eine über ein Heteroatom wie Sauerstoff oder Stickstoff gebundene Acrylgruppe (-C(O)-CH=CH₂), Methacrylgruppe, (C(O)-C(CH₃)=CH₂), Maleinylgruppe (-C(O)-CH=CH-CO₂H), Allylgruppe (-CH₂C(CH₃)=CH₂), Methallylgruppe (-CH₂C(CH₃)=CH₂) oder Vinylgruppe (-CH=CH₂) vorliegt, wenigstens eine funktionelle Gruppe aufweisen, die bei der Hydrolyse in Strukturelement der Formel -CH(OH)-CH(OH)- umgewandelt wird. Beispiele für derartige funktionelle Gruppen sind Ethylencarbonatgruppen: 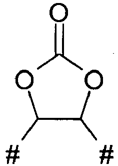 Oxirangruppen: 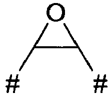 und
1,3-Dioxolangruppen 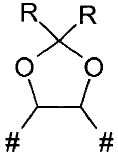 (R stehen unabhängig voneinander z. B. für Wasserstoff oder Methyl).

Beispiele für derartige Monomere M2 sind Glycidylacrylat (Acrylsäureoxiranylmethylester), Glyciylmethacrylat (Methacrylsäureoxiranylmethylester), Acrylsäure-[1,3]-dioxolan-4-ylmethylester, Methacrylsäure-[1,3]-dioxolan-4-ylmethylester, Acrylsäure-2,2-dimethyl-[1,3]-dioxolan-4-ylmethylester, Methacrylsäure-2,2-dimethyl-[1,3]-dioxolan-4-ylmethylester, Acrylsäure-2-oxo-[1,3]-dioxolan-4-ylmethylester, Methacrylsäure-2-oxo-[1,3]-dioxolan-4-ylmethylester,

Bevorzugte wasserunlösliche Polymere P sind solche, bei denen der Anteil der Monomere M2 im Bereich von 0,2 bis 7 Gew.-% und insbesondere im Bereich von 0,5 bis 5 Gew.-%, jeweils bezogen auf das Gesamtgewicht der zur Polymerisation eingesetzten Monomere M, liegt.

Die Monomere M können zusätzlich zu den Monomeren M1 und M2 ein oder mehrere Monomere M3 umfassen, die ausgewählt sind unter monoethylenisch ungesättigten Monomeren mit wenigstens einer Carboxylat oder Carbonsäureamidgruppe.

Der Anteil der Monomere M3, bezogen auf die Gesamtmenge der Monomeren M, wird in der Regel 9 Gew.-% und insbesondere 3 Gew.-% nicht überschreiten und liegt typischerweise im Bereich von 0,05 bis 9 Gew.-%, insbesondere im Bereich von 0,1 bis 3 Gew.-% und speziell im Bereich von 0,2 bis 2 Gew.-%. Sofern die Polymere P ein oder mehrere Monomere M3 einpolymerisiert enthalten wird die Gesamtmenge der Monomere M2 und M3 in der Regel 10 Gew.-%, insbesondere 8 Gew.-% und speziell 7 Gew.-% nicht überschreiten und liegt vorzugsweise im Bereich von 0,15 bis 10 Gew.-%, insbesondere im Bereich von 0,3 bis 8 Gew.-% und speziell im Bereich von 0,6 bis 7 Gew.-%, bezogen auf die Gesamtmenge der Monomere M. Dementsprechend liegt dann die Gesamtmenge der Monomere M1 im Bereich von 90 bis 99,85 Gew.-%, insbesondere im Bereich von 92 bis 99,7 Gew.-% und speziell im Bereich von 93 bis 99,3 Gew.-%, bezogen auf die Gesamtmenge der Monomere M.

Monomere M3 sind vorzugsweise ausgewählt unter monoethylenisch ungesättigten C₃-C₈-Monocarbonsäuren wie Acrylsäure und Methacrylsäure, monoethylenisch ungesättigten C₄-C₈-Dicarbonsäuren wie Maleinsäure, Fumarsäure und Itaconsäure und den primären Amiden monoethylenisch ungesättigter C₃-C₈-Monocarbonsäuren wie Acrylamid und Methacrylamid.

Die Monomere M können zusätzlich zu den Monomeren M1, M2 und M3 ein oder mehrere Monomere M4 umfassen, die unter den Hydroxy-C₂-C₄-alkylestern monoethylenisch ungesättigter C₃-C₈-Monocarbonsäuren, Monoestem monoethylenisch ungesättigter C₃-C₈-Mono- oder C₄-C₈-Dicarbonsäuren mit Polyoxy-C₂-C₄-alkylenethern und monoethylenisch ungesättigte Monomeren mit wenigstens einer Harnstoffgruppe ausgewählt sind.

Als M4 geeignete Hydroxy-C₂-C₄-alkylester monoethylenisch ungesättigter C₃-C₈-Monocarbonsäuren sind beispielsweise die Hydroxy-C₂-C₄-alkylester der Acrylsäure und der Methacrylsäure wie 2-Hydroxyethylacrylat, 2-Hydroxyethylmethacrylat, 2-Hydroxyethylethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat, 4-Hydroxybutylacrylat, 4-Hydroxybutylmethacrylat, und Mischungen davon zu nennen.

Geeignete Monomere M4 mit wenigstens einer Harnstoffgruppe sind beispielsweise N-Vinylhamstoff, N-(2-Acryloxyethyl)imidazolidin-2-on und N-(2-Methacryloxyethyl)-imidazolidin-2-on (2-Ureidomethacrylat, UMA).

Geeignete Monomere M4 aus der Gruppe der Monoester monoethylenisch ungesättigter C₃-C₈-Mono- oder C₄-C₈-Diarbonsäuren mit Polyoxy-C₂-C₄-alkylenethern sind beispielsweise die Monoester monoethylenisch ungesättigter C₃-C₈-Monocarbonsäuren, insbesondere der Acrylsäure und der Methacrylsäure, mit Poly-C₂-C₄-alkylenethern der allgemeinen Formel (A) 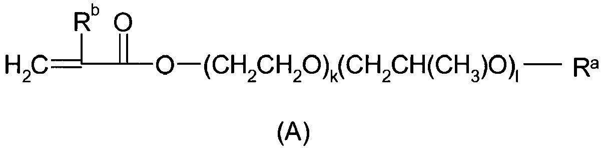 worin
die Reihenfolge der Alkylenoxideinheiten beliebig ist,
k und l unabhängig voneinander für eine ganze Zahl im Bereich von 0 bis 100, insbesondere im Bereich von 0 bis 50 stehen, wobei die Summe aus k und l mindestens 3, insbesondere 4, z. B. 3 bis 200 und insbesondere 4 bis 100, beträgt,
R^{a} für Wasserstoff, C₁-C₃₀-Alkyl, C₅-C₈-Cycloalkyl oder C₆-C₁₄-Aryl steht, und
R^{b} für Wasserstoff oder C₁-C₈-Alkyl, insbesondere Wasserstoff oder Methyl, steht.

Bevorzugt steht k für eine ganze Zahl von 3 bis 50, insbesondere 4 bis 30. Bevorzugt steht I für eine ganze Zahl von 0 bis 30, insbesondere 0 bis 20. Besonders bevorzugt ist I = 0. Bevorzugt liegt die Summe aus k und l im Bereich von 3 bis 50 und insbesondere im Bereich von 4 bis 40.

Vorzugsweise steht R^{a} in der Formel (A) für Wasserstoff, C₁-C₂₀-Alkyl, z. B. Methyl, Ethyl, n-Propyl, Isopropyl, n-Butyl oder sec-Butyl, n-Pentyl, n-Hexyl, Octyl, 2-Ethylhexyl, Decyl, Lauryl, Palmityl oder Stearyl. Besonders bevorzugt steht R^{a} für Wasserstoff oder C₁-C₄-Alkyl.

Bevorzugt steht R^{b} für Wasserstoff oder Methyl.

Vorzugsweise ist das wenigstens eine Monomer M4 ausgewählt unter Hydroxy-C₂-C₄-alkylestern von monoethylenisch ungesättigten C₃-C₈-Monocarbonsäuren, 2-Ureidomethacrylat und Poly-C₂-C₄-alkylenethern der allgemeinen Formel (A') 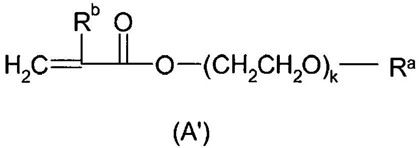 worin
k für eine ganze Zahl von 4 bis 40 steht, Rₐ für Wasserstoff oder C₁-C₄-Alkyl steht und R^{b} Wasserstoff oder Methyl bedeutet.

Bevorzugte Polymere (P) sind durch eine Polymerisation der Monomeren M erhältlich, bei der der Anteil der Monomere M4 im Bereich von 0 bis 9 Gew.-%, insbesondere im Bereich von 0 bis 5 Gew.-% liegt.

Sofern die Polymere (P) ein oder mehrere Monomere M3 oder M4 einpolymerisiert enthalten, wird die Gesamtmenge der Monomere M2, M3 und/oder M4 in der Regel 10 Gew.-%, insbesondere 8 Gew.-% und speziell 7 Gew.-% nicht überschreiten und liegt vorzugsweise im Bereich von 0,15 bis 10 Gew.-%, insbesondere im Bereich von 0,3 bis 8 Gew.-% und speziell im Bereich von 0,6 bis 7 Gew.-%, bezogen auf die Gesamtmenge der Monomere M. Dementsprechend liegt dann die Gesamtmenge der Monomere M1 im Bereich von 90 bis 99,85 Gew.-%, insbesondere im Bereich von 92 bis 99,7 Gew.-% und speziell im Bereich von 93 bis 99,3 Gew.-%, bezogen auf die Gesamtmenge der Monomere M.

Das Polymer (P) kann neben den vorgenannten monoethylenisch ungesättigten Monomeren auch geringe Mengen mehrfach ethylenisch ungesättigter Monomere einpolymerisiert enthalten (Monomere M5), welche bei der Herstellung des Polymeren (P) zu einer internen Vernetzung führen. Der Anteil derartiger Monomere wird jedoch in der Regel 1 Gew.-%, insbesondere 0,5 Gew.-% und speziell 0,1 Gew.-%, bezogen auf die Gesamtmenge der das Polymer konstituierenden Monomere M nicht überschreiten. Beispiele für mehrfach ethylenisch ungesättigte Monomere sind Di- und Triester ethylenisch ungesättigter Carbonsäuren, insbesondere die Bisacrylate von Di- und Triolen und die Trisacrylate von Tri- und Tetraolen, z. B. die Bisacrylate und die Bismethacrylate von Ethylenglykol, Diethylenglykol, Triethylenglykol, Neopentylglykol oder Polyethylenglykolen, Vinyl und Allylester gesättigter oder ungesättigter Dicarbonsäuren, Vinyl und Allylester monoethylenisch ungesättigter Monocarbonsäuren, sowie N,N-Diallylamine mit Wasserstoff oder eine Alkylgruppe als weiteren Substituenten am Stickstoff, insbesondere N,N-Diallylamin und N,N-Diallyl-N-methylamin. Vorzugsweise umfasst das Polymer (P) jedoch keine mehrfach ethylenisch ungesättigten Monomere.

Weitere geeignete Monomere M sind beispielsweise monoethylenisch ungesättigte Phosphon- und Sulfonsäuren, z. B. Vinylphosphonsäure und Allylphosphonsäure, Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Styrolsulfonsäuren und 2-Acrylamido-2-methyl-propansulfonsäure, Styrolsulfonsäuren und deren Derivate, wie etwa Styrol-4-sulfonsäure und Styrol-3-sulfonsäure, sowie die Salze, insbesondere die Erdalkali- oder Alkalimetallsalze der vorgenannten Säuren, wie etwa Natrium-styrol-3-sulfonat und Natrium-styrol-4-sulfonat, sowie Mono- und Diester von Hydroxy-C₂-C₄-alkylacrylaten oder -methacrylaten wie Hydroxyethylacrylat, Hydroxypropylacrylat, Hydroxybutylacrylat, Hydroxyethylmethacrylat, Hydroxypropylmethacrylat oder Hydroxybutylmethacrylat, mit Phosphorsäure und die Salze dieser Phosphorsäuremono- und -diester, insbesondere die Alkali- und Erdalkalisalze.

Der Anteil an Monomeren M, bei denen es sich um Phosphonsäuren, Sulfonsäuren, Phosphorsäureester oder deren Salze handelt, liegt bezogen auf die Gesamtmenge der das Polymer (P) konstituierenden Monomere M, im Bereich von 0 bis 2 Gew.-% und ist vorzugsweise ≤ 0,1 Gew.-%.

In einer bevorzugten Ausführungsform der vorliegenden Erfindung ist das Polymer (P), bezogen auf die Gesamtmenge der das Polymer (P) konstituierenden Monomere M, zu wenigstens 98 Gew.-%, insbesondere zu wenigstens 99,5 Gew.-% und speziell zu wenigstens 99,9 Gew.-% oder 100 Gew.-% aus monoethylenisch ungesättigten Monomeren M aufgebaut, wobei die Monomere M in diesem Fall vorzugsweise die folgenden Monomere umfassen:
- 90 bis 99,9 Gew.-%, bzw. 90 bis 99,85 Gew.-%, vorzugsweise 92 bis 99,8 Gew.-% bzw. 92 bis 99,7 Gew.-% und insbesondere 93 bis 99,5 Gew.-%, bzw. 93 bis 99,3 Gew.-% Monomere M1, die unter gering wasserlöslichen neutralen monoethylenisch ungesättigten Monomeren und insbesondere unter Estern α,β-ethylenisch ungesättigter Carbonsäuren mit C₁-C₃₀-Alkanolen und Vinylaromaten ausgewählt sind;
- 0,1 bis 10 Gew.-%, vorzugsweise 0,2 bis 7 Gew.-%, insbesondere 0,5 bis 5 Gew.-% Monomere M2, die unter monoethylenisch ungesättigten Monomeren mit wenigstens zwei an vicinale C-Atome gebundene Hydroxylgruppen aufweisen. sowie gegebenenfalls:
- 0 bis 9 Gew.-%, z. B. 0,05 bis 9 Gew.-%, insbesondere 0,1 bis 3 Gew.-% und speziell 0,2 bis 2 Gew.-% Monomere M3, die unter monoethylenisch ungesättigten Monomeren mit wenigstens einer Carboxylat- oder Carbonsäureamidgruppe ausgewählt sind; und / oder:
- 0 bis 9 Gew.-%, insbesondere 0 bis 5 Gew.-% und speziell 0 bis 3 Gew.-% Monomere M4, die unter Hydroxy-C₂-C₄-alkylestern monoethylenisch ungesättigter Monocarbonsäuren, Monoester monoethylenisch ungesättigter Carbonsäuren mit Polyoxy-C₂-C₄-alkylenethern und monoethylenisch ungesättigte Monomeren mit wenigstens einer Harnstoffgruppe ausgewählt sind.

Die Polymere (P) weisen bevorzugt ein gewichtsmittleres Molekulargewicht M_{w} im Bereich von etwa 10.000 bis 20.000.000 und bevorzugt im Bereich von etwa 50.000 bis 10.000.000 auf. Die Molmassenbestimmung kann dabei durch Gelpermeationschromatographie mit einem Standard, wie Polymethylmethacrylat, erfolgen.

Die Glasübergangstemperatur T_{g} des Polymers (P) hängt von der gewünschten Verwendung ab und liegt in der Regel im Bereich von -60 °C bis 60 °C, vorzugsweise im Bereich von -50 °C bis 50 °C und besonders bevorzugt im Bereich von -40 °C bis 50 °C. Unter der Glasübergangstemperatur wird die sog. Midpoint Temperatur gemäß ASTM 3418/82 verstanden, wie sie mittels Differenzkalorimetrie (DSC) bestimmt werden kann. Die Glasübergangstemperatur eines Polymeren kann auch durch Dynamisch-Mechanische Analyse (DMTA) nach der im Zusammenhang mit den Beispielen angegebenen Methode bestimmt werden. Die Glasübergangstemperatur kann durch geeignete Wahl der Monomere M1 eingestellt werden.

Neben dem Polymer (P) enthalten die wässrigen Bindemittelzusammensetzungen bzw. die wässrigen Polymerdispersionen, und dementsprechend auch die daraus erhältlichen Pulver, typischerweise noch wenigstens eine oberflächenaktive Substanz zur Stabilisierung der Polymerpartikel des Polymeren (P). Hierzu zählen ionische und nicht ionische Emulgatoren sowie ionische und nichtionische Schutzkolloide bzw. Stabilisatoren. Unter Emulgatoren versteht man im Unterschied zu Schutzkolloiden oberflächenaktive Substanzen, deren Molekulargewicht (Zahlenmittel) üblicherweise unterhalb 2000 g/mol und speziell unterhalb 1500 g/mol liegt. Bei Schutzkolloiden wiederum handelt es sich üblicherweise um in Wasser lösliche Polymere mit einem zahlenmittleren Molekulargewicht oberhalb 2000 g/mol, z. B. im Bereich von 2000 bis 100000 g/mol und insbesondere im Bereich von 5000 bis 50000 g/mol. Selbstverständlich können Schutzkolloide und Emulgatoren im Gemisch eingesetzt werden.

Die Menge an oberflächenaktiver Substanz liegt üblicherweise im Bereich von 0,1 bis 10 Gew.-%, vorzugsweise 0,2 bis 5 Gew.-% bezogen auf 100 Gew.-% Polymer, bzw. auf 100 Gew.-% der das Polymer konstituierenden Monomere M.

Vorzugsweise enthalten die erfindungsgemäßen wässrigen Bindemittelzusammensetzungen und Polymerdispersionen als oberflächenaktive Substanzen ausschließlich Emulgatoren. Insbesondere hat es sich bewährt, wenn die Polymerdispersion eine Kombination aus wenigstens einem anionischen und wenigstens einem nicht ionischen Emulgator als oberflächenaktive Substanzen enthält. Die Emulgatoren sind in der Regel nicht polymerisierbar, d. h. sie weisen keine ethylenisch ungesättigten Gruppen auf, die in einer radikalischen Polymerisation polymerisierbar sind. Ein Teil oder die Gesamtmenge der Emulgatoren kann aber polymerisierbar sein. Solche polymerisierbaren Emulgatoren enthalten ethylenisch ungesättigte Gruppen und sind entweder nichtionische oder anionische Emulgatoren. Polymerisierbare nichtionische Emulgatoren sind vorzugsweise ausgewählt unter C₂-C₃-Alkoxilaten von Alkenolen, insbesondere von Prop-2-en-1-ol, und Monoestern von monoethylenisch ungesättigten Mono- oder Dicarbonsäuren mit Poly-C₂-C₃-alkylenethern, wobei der Alkoxilierungsgrad jeweils in der Regel 3 bis 100 beträgt. Polymerisierbare anionische Emulgatoren sind vorzugsweise ausgewählt unter den entsprechenden Schwefelsäure- und Phosphorsäurehalbestern der zuvor genannten nichtionischen polymerisierbaren Emulgatoren.

Zu den nicht polymerisierbaren anionischen Emulgatoren zählen üblicherweise aliphatische Carbonsäuren mit in der Regel wenigstens 10 C-Atomen sowie deren Salze, insbesondere deren Ammonium- und Alkalimetallsalze, aliphatische, araliphatische und aromatische Sulfonsäuren mit in der Regel wenigstens 6 C-Atomen sowie deren Salze, insbesondere deren Ammonium- und Alkalimetallsalze, Schwefelsäurehalbester ethoxylierter Alkanole und Alkylphenole sowie deren Salze, insbesondere deren Ammonium- und Alkalimetallsalze sowie Alkyl-, Aralkyl- und Arylphosphate einschließlich Phosphorsäurehalbester von Alkanolen und Alkylphenolen.

Beispiele für geeignete anionische Emulgatoren sind: Alkalimetall- und Ammoniumsalze von Dialkylestern der Sulfobernsteinsäure, Alkalimetall- und Ammoniumsalze von Alkylsulfaten (Alkylrest: C₈- bis C₁₈), Alkalimetall- und Ammoniumsalze von Schwefelsäurehalbestern ethoxylierter Alkanole (EO-Grad: 4 bis 30, Alkylrest: C₈- bis C₁₈), Alkalimetall- und Ammoniumsalze von Schwefelsäurehalbestern ethoxylierter Alkylphenole (EO-Grad: 3 bis 50, Alkylrest: C₄- bis C₁₆), Alkalimetall- und Ammoniumsalze von Alkylsulfonsäuren (Alkylrest: C₈- bis C₁₈) und von Alkylarylsulfonsäuren (Alkylrest: C₄- bis C₁₈). Beispiele für geeignete anionische Emulgatoren sind auch die im Folgenden angegebenen Verbindungen der allgemeinen Formel 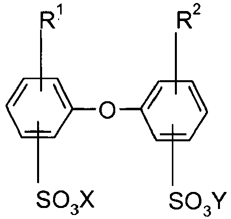 worin R¹ und R² Wasserstoff oder C₄- bis C₁₄-Alkyl bedeuten und nicht gleichzeitig Wasserstoff sind, und X und Y Alkalimetallionen und/oder Ammoniumionen sein können. Vorzugsweise bedeuten R¹ und R² Wasserstoff oder lineare oder verzweigte Alkylreste mit 6 bis 18 C-Atomen und insbesondere mit 6, 12 und 16 C-Atomen, wobei R¹ und R² nicht beide gleichzeitig Wasserstoff sind. X und Y sind bevorzugt Natrium-, Kalium- oder Ammoniumionen, wobei Natrium besonders bevorzugt ist. Besonders vorteilhaft sind Verbindungen, in denen X und Y Natrium, R¹ ein verzweigter Alkylrest mit 12 C-Atomen und R² Wasserstoff ist oder eine der für R¹ angegebenen, von Wasserstoff verschiedenen Bedeutungen hat. Häufig werden technische Gemische verwendet, die einen Anteil von 50 bis 90 Gew.-% des monoalkylierten Produktes aufweisen, beispielsweise Dowfax^{®} 2A1 (Warenzeichen der Dow Chemical Company).

Geeignete nichtionische Emulgatoren sind typischerweise ethoxylierte Alkanole mit 8 bis 36 C-Atomen im Alkylrest, ethoxylierte Mono-, Di- und Trialkylphenole mit typischerweise 4 bis 12 C-Atomen in den Alkylresten, wobei die ethoxylierten Alkanole und Alkylphenole typischerweise einen Ethoxylierungsgrad im Bereich von 3 bis 50 aufweisen.

Weitere geeignete Emulgatoren finden sich beispielsweise in Houben-Weyl, Methoden der organischen Chemie, Band 14/1, Makromolekulare Stoffe, Georg Thieme Verlag, Stuttgart, 1961, S. 192 bis 208.

In den erfindungsgemäßen wässrigen Bindemittelzusammensetzungen und in den erfindungsgemäßen wässrigen Polymerdispersionen liegt das Polymer (P) als heterogene Phase in Form feinteiliger Partikel vor, die in einer homogenen wässrigen Phase dispergiert bzw. suspendiert sind. Die homogene wässrige Phase kann neben Wasser sowie den bei der Herstellung typischerweise eingesetzten Hilfsstoffen wie oberflächenaktiven Substanzen, Säuren, Basen und Zerfallsprodukten aus der Polymerisationsreaktion noch geringe Mengen an mit Wasser mischbaren organischen Lösungsmitteln enthalten. Der Anteil der zuletzt genannten Komponenten wird typischerweise 1 Gew.-%, bezogen auf das Gesamtgewicht der Dispersion nicht überschreiten.

Bei der wässrigen Polymerdispersion des Polymeren (P) kann es sich um das unmittelbare Produkt einer radikalischen, wässrigen Emulsionspolymerisation der Monomeren M oder um eine Sekundärdispersion handeln, d. h. das Polymer (P) wird im Anschluss an seine Herstellung in Wasser suspendiert bzw. dispergiert. Dabei kann die radikalische, wässrige Emulsionspolymerisation auch als sogenannte Miniemulsionspolymerisation durchgeführt werden, d. h. die zu polymerisierenden Monomere werden in Form einer wässrigen Miniemulsion eingesetzt, worin die Monomertröpfchen sehr kleine Durchmesser aufweisen (volumenmittlerer Tröpfchendurchmesser der Monomeremulsion < 1 µm, insbesondere < 0,6 µm). Unter einer Sekundärdispersion versteht man eine wässrige Polymerdispersion, deren Polymer zunächst in einer Lösungspolymerisation oder in sonstiger Weise hergestellt und anschließend in einem wässrigen Medium, gegebenenfalls unter Entfernung von organischem Lösungsmittel aus der Lösungspolymerisation, dispergiert oder emulgiert wird. Im Hinblick auf die Anwendungen sind Polymerdispersionen bevorzugt, die mittels radikalischer, wässriger Emulsionspolymerisation hergestellt wurden. Bevorzugt sind dabei Polymerdispersionen, worin die dispergierten Polymerpartikel einen mittleren Teilchendurchmesser, bestimmt durch Lichtstreuung, im Bereich von 0,03 bis 1,5 µm und insbesondere im Bereich von 0,05 bis 1 µm aufweisen. Unter dem mittleren Teilchendurchmesser versteht man den durch quasielastische Lichtstreuung (QELS) an verdünnten Polymerdispersionen (0,001 bis 1 Gew.-%, 22 °C) bestimmten Mittelwert der Kumulantenanalyse (mean of fits).

Für die erfindungsgemäßen verwendeten Polymerdispersionen hat es sich als vorteilhaft erwiesen, wenn man das im Folgenden beschriebene Verfahren einer radikalischen, wässrigen Emulsionspolymerisation der das Polymer (P) konstituierenden Monomere M anwendet. Bei diesem Verfahren führt man eine radikalische, wässrige Emulsionspolymerisation der ethylenisch ungesättigten Monomere M in an sich bekannter Weise, und vorzugsweise nach einem Monomerzulaufverfahren durch, wobei man vorzugsweise vorzugsweise ein teilchenförmiges Saatpolymer verwendet, das man insbesondere im Polymerisationsreaktor vorlegt. In diesem Zusammenhang bedeutet "vorlegen", dass das Saatpolymer entweder vor Beginn der Polymerisation zugegeben oder vor der eigentlichen Emulsionspolymerisation im Polymerisationsreaktor durch in-situ-Emulsionspolymerisation gebildet wird.

Unter einem Monomerzulaufverfahren versteht man hier und im Folgenden, dass man wenigstens 90 % und insbesondere wenigstens 95 % der zu polymerisierenden Monomere unter Polymerisationsbedingungen in einen Polymerisationsreaktor gibt. Vorzugsweise befindet sich im Polymerisationsreaktor bereits ein erstes teilchenförmiges Saatpolymer, typischerweise in Form einer wässrigen Dispersion des Saatpolymeren.

Unter dem Begriff "Saatpolymer" versteht der Fachmann ein feinteiliges Polymer in Form einer wässrigen Polymerdispersion. Die gewichtsmittlere Teilchengröße der im erfindungsgemäßen Verfahren eingesetzten Saatpolymere (Gewichtsmittel, d₅₀-Wert) liegt typischerweise unterhalb 200 nm, häufig im Bereich von 10 bis 150 nm und insbesondere im Bereich von 20 bis 120 nm. Die Monomerzusammensetzung der Saatpolymere ist von untergeordneter Bedeutung. Geeignet sind sowohl Saatpolymere, die überwiegend aus vinylaromatischen Monomeren und insbesondere aus Styrol aufgebaut sind (so genannte Styrol-Saat), als auch Saatpolymere, die überwiegend aus C₁-C₁₀-Alkylacrylaten und/oder C₁-C₁₀-Alkylmethacrylaten, z. B. aus einer Mischung aus Butylacrylat und Methylmethacrylat aufgebaut sind. Neben diesen Hauptmonomeren, die typischerweise wenigstens 80 Gew.-% und insbesondere wenigstens 90 Gew.-% des Saatpolymeren ausmachen, können die Saatpolymere auch davon verschiedene Monomere, insbesondere solche mit einer erhöhten Wasserlöslichkeit, z. B. Monomere mit wenigstens einer Säurefunktion und/oder neutrale Monomere mit erhöhter Wasserlöslichkeit, und/oder Monomere mit zwei oder mehreren ethylenisch ungesättigten Doppelbindungen einpolymerisiert enthalten (Monomere M5). Der Anteil derartiger Monomere wird in der Regel 20 Gew.-% und insbesondere 10 Gew.-% nicht überschreiten und liegt, sofern vorhanden, typischerweise im Bereich von 0,1 bis 10 Gew.-%, bezogen auf die Gesamtmenge der das Saatpolymer konstituierenden Monomere.

Die radikalische, wässrige Emulsionspolymerisation erfolgt typischerweise in Gegenwart oberflächenaktiver Substanzen wie zuvor beschrieben. Vorzugsweise werden im erfindungsgemäßen Verfahren ausschließlich Emulgatoren eingesetzt. Insbesondere hat es sich bewährt, eine Kombination aus wenigstens einem anionischen und wenigstens einem nicht ionischen Emulgator als oberflächenaktive Substanz zu verwenden. Typischerweise werden die oberflächenaktiven Substanzen in Mengen von 0,1 bis 10 Gew.-%, insbesondere in Mengen von 0,2 bis 5 Gew.-%, bezogen auf das Gewicht der zu polymerisierenden Monomere M eingesetzt.

Bei den zur radikalischen Emulsionspolymerisation eingesetzten Initiatoren handelt es sich üblicherweise um wasserlösliche, Radikale bildende Substanzen.

Wasserlösliche Initiatoren für die Emulsionspolymerisation sind organische oder anorganische Peroxidverbindungen, d. h. Verbindungen mit wenigstens einer Peroxid- oder Hydroperoxidgruppe, z. B. Ammonium- und Alkalimetallsalze der Peroxodischwefelsäure, z. B. Natriumperoxodisulfat, Wasserstoffperoxid oder organische Peroxide, z. B. tert-Butylhydroperoxid.

Geeignet sind auch so genannte Reduktions-Oxidations(Redox)-Initiator Systeme. Die Red-Ox-Initiator-Systeme bestehen aus mindestens einem meist anorganischen Reduktionsmittel und einem anorganischen oder organischen Oxidationsmittel. Bei der Oxidationskomponente handelt es sich z. B. um die bereits vorstehend genannten Peroxidverbindungen. Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden. Übliche Redox-Initiator-Systeme sind z. B. Ascorbinsäure/Eisen(II)sulfat/Natriumper-oxidisulfat, tert-Butylhydroperoxid/Natriumdisulfit, tert-Butylhydroperoxid/Na-Hydroxy-methansulfinsäure. Die einzelnen Komponenten, z. B. die Reduktionskomponente, können auch Mischungen sein z. B. eine Mischung aus dem Natriumsalz der Hydroxymethansulfinsäure und Natriumdisulfit.

Die genannten Initiatoren werden meist in Form wässriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im Allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im Allgemeinen 0,1 bis 10 Gew.-%, bevorzugt 0,2 bis 5 Gew.-%, bezogen auf die zu polymerisierenden Monomere. Es können auch mehrere, verschiedene Initiatoren bei der Emulsionspolymerisation Verwendung finden.

Bei der Polymerisation können Regler eingesetzt werden, z. B. in Mengen von 0 bis 1 Gew.-%, bezogen auf die zu polymerisierenden Monomere M. Hierdurch wird die Molmasse des Polymerisats verringert. Geeignet sind beispielsweise Verbindungen mit einer Thiolgruppe wie tert.-Butylmercaptan, Mercaptoethanol, Thioglykolsäure, Thioglykolsäureethylester, Mercaptopropyltrimethoxysilan und tert.-Dodecylmercaptan. Gegebenenfalls ist es von Vorteil, den Regler im Verlauf der Polymerisation über einen längeren Zeitraum, beispielsweise parallel zur Zugabe der Monomere M, zuzugeben. Die Zugabe kann dann mit kontinuierlicher Zulaufrate oder zunehmender oder abnehmender Zulaufrate erfolgen.

Das erfindungsgemäße Verfahren wird vorzugsweise als Zulaufverfahren durchgeführt, d. h. wenigstens 90 % der zu polymerisierenden Monomere M werden im Verlauf der Polymerisation unter Polymerisationsbedingungen in den Polymerisationsreaktor gegeben. Die Zugabe kann kontinuierlich oder stufenweise erfolgen. Im Verlauf der Polymerisation kann die Monomerzusammensetzung einmal, mehrfach oder auch kontinuierlich geändert werden (Gradientenfahrweise).

Bevorzugt geht man im erfindungsgemäßen Verfahren so vor, dass man ein extern erzeugtes Saatpolymer in Form einer wässrigen Dispersion, gegebenenfalls zusammen mit Wasser vorlegt. Alternativ kann das Saatpolymer in-situ durch Emulsionspolymerisation, vorzugsweise unter Verwendung einer kleinen Teilmenge der Monomere M, vorab hergestellt werden. Nach Vorlage oder Synthese des Saatpolymers wird, falls noch nicht geschehen, auf Polymerisationstemperatur erhitzt und dann eine Teilmenge des Polymerisationsinitiators, z. B. 1 bis 20 Gew.-% und insbesondere 5 bis 15 Gew.-%, bezogen auf die Gesamtmenge des Initiators zugegeben. Man kann auch so vorgehen, dass man zunächst die Teilmenge des Polymerisationsinitiators zugibt und anschließend auf Polymerisationstemperatur erhitzt. Vorzugsweise erhält zu diesem Zeitpunkt der Polymerisationsreaktor weniger als 5 Gew.-% der zu polymerisierenden Monomere M. Anschließend erfolgt die Zugabe der zu polymerisierenden Monomere in den Polymerisationsreaktor unter Polymerisationsbedingungen. Die Zugabe erfolgt üblicherweise über einen längeren Zeitraum von üblicherweise wenigstens 30 Minuten, z. B. 30 Minuten bis 10 h, insbesondere über einen Zeitraum von 1 h bis 6 h. Wie bereits erläutert, kann die Zugabe mit konstanter, zunehmender oder abnehmender Zugaberate erfolgen. Gemäß einer ersten bevorzugten Ausführungsform erfolgt die Zugabe zu Beginn der Polymerisation mit zunehmender Zulaufrate. Gemäß einer anderen, ebenfalls bevorzugten Ausführungsform des erfindungsgemäßen Verfahrens erfolgt die Zugabe mit konstanter Zugaberate. Die Monomere können als solche zugegeben werden. Vorzugsweise erfolgt die Zugabe der Monomere in Form einer wässrigen Monomeremulsion, die typischerweise wenigstens einen Teil, vorzugsweise wenigstens 70 Gew.-% der in der Emulsionspolymerisation eingesetzten oberflächenaktiven Substanzen enthält. Typischerweise weist diese Monomeremulsion einen Monomergehalt im Bereich von 60 bis 85 Gew.-% und insbesondere im Bereich von 65 bis 80 Gew.-% auf. Es ist prinzipiell möglich, die Monomere bzw. die Monomeremulsion über mehrere Zuläufe in den Polymerisationsreaktor zu geben, wobei die Monomerenzusammensetzung der einzelnen Zuläufe voneinander verschieden sein kann. In der Regel reicht es jedoch aus, die Monomere als Mischung über einen Zulauf in den Polymerisationsreaktor zu geben. Sofern die Monomere in Form einer wässrigen Emulsion in den Polymerisationsreaktor gegeben werden, kann es von Vorteil sein, die Monomere unmittelbar vor ihrer Zugabe und nach Maßgabe ihrer Zugabe in dem Polymerisationsreaktor frisch zu emulgieren, beispielsweise nach einem kontinuierlichen Verfahren. Man kann auch die Monomeremulsion zunächst herstellen und anschließend mit der gewünschten Zugaberate in den Polymerisationsreaktor einbringen.

Üblicherweise erfolgt parallel zur Monomerzugabe die Zugabe wenigstens einer Teilmenge oder der Gesamtmenge des Polymerisationsinitiators. Typischerweise wird man wenigstens 80 % des für die Emulsionspolymerisation benötigten Polymerisationsinitiators, insbesondere 85 bis 95 % des Polymerisationsinitiators im Verlauf der Polymerisationsreaktion in den Polymerisationsreaktor geben. Die Zugabe des Polymerisationsinitiators kann mit konstanter Zugaberate oder mit einer sich ändernden, z. B. einer abnehmenden oder zunehmenden Zugaberate erfolgen.

Polymerisationstemperatur und Polymerisationsdruck sind von untergeordneter Bedeutung. Die Emulsionspolymerisation erfolgt typischerweise bei Temperaturen im Bereich von 30 bis 130, vorzugsweise im Bereich von 50 bis 100 °C. Der Polymerisationsdruck liegt üblicherweise im Bereich des Normaldrucks, d. h. bei Umgebungsdruck, kann aber auch leicht darüber oder darunter liegen, z. B. im Bereich von 800 bis 1500 mbar.

Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet.

In der Regel empfiehlt es sich, nach Beendigung der eigentlichen Polymerisationsreaktion, d. h. nach Beendigung der Zugabe der zu polymerisierenden Monomere bzw. nach einem Umsatz der im Polymerisationsreaktor befindlichen Monomere von mindestens 95 %, eine chemische und/oder physikalische Desodorierung zur Entfernung nicht polymerisierter Monomere durchzuführen. In der Regel wird man wenigstens eine chemische Desodorierung durchführen. Unter einer chemischen Desodorierung versteht man eine Nachpolymerisationsphase, die durch Zugabe wenigstens eines weiteren Polymerisationsinitiators, insbesondere eines der vorgenannten Redoxinitiatorsysteme ausgelöst wird. Verfahren hierzu sind bekannt, beispielsweise aus DE-A-4435422, DE-A-4435423 sowie DE-A-4419518. Die Absenkung der Restmonomere kann auch durch kombinierte Maßnahmen einer chemischen und physikalischen Desodorierung erfolgen, wobei vorzugsweise die physikalische Desodorierung im Anschluss an die chemische Desodorierung durchgeführt wird. Die so erhaltenen Polymerdispersionen enthalten vorzugweise weniger als 1500 ppm, insbesondere weniger als 1000 ppm und besonders bevorzugt weniger als 500 ppm flüchtige organische Anteile TVOC. Unter TVOC (Total Volatile Organic Compounds) werden alle organischen Verbindungen mit einem Siedepunkt von maximal 250 °C bei 1 bar verstanden. Die Bestimmung des restflüchtigen Gehalts erfolgt typischerweise nach DIN 55649.

Es hat sich weiterhin als vorteilhaft erwiesen, wenn man die wässrige Polymerdispersion nach ihrer Herstellung durch Zugabe einer anionischen oberflächenaktiven Substanz stabilisiert. Hierfür bevorzugt sind die Dialkylester der Sulfobernsteinsäure bzw. ihrer Salze, insbesondere der Natriumsalze, insbesondere die Dialkylester der Sulfobernsteinsäure mit 6 bis 12 C-Atomen je Alkylrest. Typischerweise versetzt man die wässrige Polymerdispersion im Anschluss an die Emulsionspolymerisation mit 0,05 bis 2 Gew.-% und insbesondere mit 0,1 bis 1 Gew.-% einer derartigen anionischen oberflächenaktiven Substanz.

In der Regel wird man die wässrige Polymerdispersion außerdem mit einem oder mehreren Bioziden (Konservierungsmittel) gegen einen Befall mit Mikroorganismen stabilisieren. Hierzu zählen beispielsweise Alkylester der para-Hydroxybenzoesäure, Natriumbenzoat, 2-Brom-2-nitropropan-1,3-diol, ortho-Phenylphenol, Dichlorophen, Benzylalkoholhemiformal, Pentachlorophenol, 2,4-Dichlorbenzylalkohol sowie insbesondere substituierte Isothiazolone wie z. B. C₁-C₁₀-Alkylisothiazolinone, 5-Chlor-2-methyl-4-isothiazolinon und Benzoisothiazolinonen, z. B. die unter den Bezeichnungen Proxel^{®} der Fa. Avecia (bzw. Fa. Arch) oder Acticide^{®} der Fa. Thor Chemie vertriebenen Produkte. Konservierungsmittel werden üblicherweise in Mengen von 0,01 bis 10 Gramm pro Liter der Polymerdispersion eingesetzt.

Der Feststoffgehalt der wässrigen Polymerdispersionen beträgt üblicherweise von 30 bis 80 Gew.-%, vorzugsweise 40 bis 75 Gew.-% und speziell von 45 bis 70 Gew.-%.

Die in den Polymerdispersionen vorliegenden Polymerpartikel haben in der Regel einen mittleren Teilchendurchmesser, bestimmt durch Lichtstreuung (s. o.) von 0,03 bis 1,5 µm, häufig von 0,05 bis 1 µm, vorzugsweise von 0,06 bis 0,8 µm und insbesondere von 0,07 bis 0,6 µm. Die Polymerpartikel können sowohl eine monomodale Teilchengrößenverteilung, also eine Gauß'sche Verteilung mit nur einem Maximum, oder eine polymodale Verteilung mit wenigstens zwei ausgeprägten Maxima, die sich in der Regel um wenigstens 0,05 µm unterscheiden, aufweisen.

Zur Herstellung der von Polymerdispersionen mit polymodaler Verteilung kann auf entsprechende aus dem Stand der Technik bekannte Verfahren zurückgegriffen werden. Beispielsweise kann man das zuvor beschriebene Verfahren einer radikalischen, wässrigen Emulsionspolymerisation in der Weise abwandeln, dass man im Verlauf der Polymerisation, nachdem bereits ein Teil der Monomere polymerisiert ist, eine größere Emulgatormenge zusetzt, welche die Bildung einer neuen Teilchengeneration initiiert. Ein solches Verfahren ist beispielsweise aus EP 8775 bekannt. Alternativ kann man auch so vorgehen, dass zu Beginn der radikalischen, wässrigen Emulsionspolymerisation zunächst ein teilchenförmiges Saatpolymer 1 vorlegt wird und dann im Verlauf der Polymerisation wenigstens ein weiteres Saatpolymer 2 in Form einer wässrigen Dispersion zugegeben wird.

Die zuvor beschriebenen wässrigen Polymerdispersionen des Polymeren (P) eignen sich in besonderer Weise als Bindemittelkomponente in den erfindungsgemäßen Bindemittelzusammensetzungen.

Neben einem Polymer (P) in Form einer wässrigen Dispersion oder eines Pulvers enthält die erfindungsgemäße Bindemittelzusammensetzung zusätzlich Borsäure und/oder wenigstens ein Salz der Borsäure, wie zuvor erläutert.

Im Rahmen dieser Erfindung bevorzugte Borsäuresalze sind Salze der Monoborsäure (ortho-Borsäure) und oligomerer Borsäure (Borsäurekondensationsprodukte - Metaborsäure) mit bis zu 20 Boratomen, und deren Salze wie beispielsweise die Salze der Diborsäure, Triborsäure, Tetraborsäure, Pentaborsäure, Hexaborsäure, Octaborsäure, Dekaborsäure oder der Dodekaborsäure einschließlich deren Hydrate. Bevorzugt sind die Alkalimetallsalze, insbesondere die Natriumsalze. Gleichermaßen bevorzugt sind die Ammoniumsalze, Alkylammoniumsalze und Hydroxyalkylammoniumsalze, wie zuvor definiert, wobei die Alkylreste in den Alkylammoniumsalzen und den Hydroxyalkylammoniumsalzen vorzugsweise jeweils nicht mehr als 8 und insbesondere nicht mehr als 4 C-Atome aufweisen. Bevorzug sind solche Alkylammoniumsalze und Hydroxyalkylammoniumsalze, die insgesamt nicht mehr als 10 und speziell nicht mehr als 8 C-Atome aufweisen. Beispiele für Borsäuresalze sind insbesondere Na₃BO₃, Na₂HBO₃, Na₄B₂O₅, Na₃B₃O₆, Boracit (Mg₃[Cl|BO₃|B₆O₁₀]), Borax (Na₂[B₄O₅(OH)₄] · 8 H₂O = Dinatriumtetraborat-Decahydrat), Kaliumpentaborat-Tetrahydrat sowie Dinatriumoctaborat-Tetrahydrat. In den erfindungsgemäßen wässrigen Bindemittelszusammensetzungen liegen Borsäure bzw. ihre Salze in gelöster Form vor, wobei monomere und oligomere Borsäure bzw. deren Salze nebeneinander vorliegen können und der Anteil monomerer und oligomerer Borsäure sich nach dem pH-Wert und/oder der Konzentration richten kann.

Die in den Bindemittelzusammensetzungen der Erfindung enthaltende Menge an Borsäure und/ oder Borat beträgt in der Regel 0,05 bis 15 Gew.-%, vorzugsweise 0,1 bis 10 Gew.-% und speziell 0,1 bis 5 Gew.-% bezüglich des Polymers (P).

Für die vorteilhafte Wirkung der Borsäure und/ oder des Borats ist der pH-Wert der erfindungsgemäßen Bindemittelzusammensetzung unkritisch. In der Regel liegt der pH-Wert aber im Bereich von 2 bis 10.

Die Borsäure und/ oder die Borate können vor, während oder im Anschluss an die Polymerisation des Polymers (P) zugesetzt werden. Alternativ können sie auch bei der Herstellung der Bindemittelzusammensetzung zugegeben werden.

Zur Herstellung einer wässrigen Bindemittelzusammensetzung werden die Borsäure und/oder die Borate vorzugsweise einer Polymerdispersion des Polymers (P) in fester Form, in Form einer Dispersion oder einer Lösung zugesetzt und gleichmäßig darin verteilt. Typischerweise erfolgt die Zugabe dabei in fester Form oder als wässrige Lösung. Eine feste Bindemittelzusammensetzung wird vorzugsweise durch Trocknung einer wässrigen Bindemittelzusammensetzung gewonnen. Gemäß einer weiteren bevorzugten Vorgehensweise wird sie durch Vermischen eines Polymers (P) in Pulverform mit Borsäure und/ oder die Borate hergestellt.

Borsäure und Borate verleihen dem erfindungsgemäßen Bindemittelzusammensetzungen für verschieden Anwendungsgebiete vorteilhafte Eigenschaften. Beispielsweise verbessern die Bindemittelzusammensetzungen als Bestandteil von Klebstoffformulierungen deren Adhäsions- und Kohäsionseigenschaften und erhöhen insbesondere die Kohäsion eines Klebverbunds, ohne die Adhäsion signifikant zu verschlechtern. In Bindemitteln für Beschichtungsmittel erhöhen sie die Blockfestigkeit der Beschichtungen auch bei erhöhter Temperatur, ohne die Flexibilität der Beschichtung zu beeinträchtigen. In polymergebundenen Faservliesen führen sie beispielsweise zu einer Verbesserung der Temperaturstandfestigkeit, d. h. der Verbund aus polymerem Bindemittel und Vliesstoff bleibt auch bei erhöhter Temperatur erhalten. Anders als andere kovalente Vernetzungsmittel beeinträchtigt die Borsäure bzw. deren Salze die Lagerstabilität der erfindungsgemäßen Bindemittelzusammensetzungen, insbesondere der wässrigen Bindemittelzusammensetzungen nicht.

Wie die vorteilhaften Wirkungen der Borsäure und der Borate auf molekularer Ebene erklärt werden können, ist für die Erfindung von nachrangiger Bedeutung. Gleichwohl wird vermutet, dass Borsäure und Borate kovalente oder koordinative Wechselwirkungen mit den funktionellen Gruppen des Polymers (P), vor allem den vicinalen Hydroxylgruppen, eingehen. Die Wechselwirkungen beruhen vermutlich vornehmlich auf kovalenten oder koordinativen Bindungen, z. B. durch Bildung cyclischer Borsäureesterstrukturen. Ein Borsäure- bzw. Boratmolekül kann demnach mit zwei oder mehreren funktionellen Gruppen des Polymers (P) interagieren und somit eine vernetzende Wirkung entfalten. Insbesondere wird vermutet, dass die Borsäure mit den vicinalen Hydroxylgruppen des Monomer M2 cyclische Esterstrukturen ausbilden kann, so dass kovalente oder zumindest koordinative Wechselwirkungen vorliegen. Da diese Esterbildung wahrscheinlich eine Gleichgewichtsreaktion ist, liegt auch bei der kovalenten bzw. koordinativen Wechselwirkung Reversibilität vor. Es wird weiter vermutet, dass die erwähnten vorteilhaften Eigenschaften der erfindungsgemäßen Bindemittelzusammensetzungen sowie der daraus erhältlichen Polymerfilme auf die genannten kovalenten bzw. koordinativen und höchstwahrscheinlich reversiblen Wechselwirkungen zurückzuführen sind. So ist beispielsweise vorstellbar, dass die hohe Festigkeit bei gleichzeitiger hoher Flexibilität der aus erfindungsgemäßen Bindemitteln gebildeten Polymerfilme auf der reversiblen Verteilung der durch Borsäure oder Borate erzeugten Vernetzungspunkte im Polymer (P) beruht. Dabei verleihen Borsäure und Borate dem Polymerfilm einerseits aufgrund der Vernetzung eine vorteilhafte Festigkeit und Härte und anderseits, aufgrund der der Fähigkeit Bindungen an einer Stelle des Polymers zu lösen und an anderer Stelle neu zu knüpfen, hohe Flexibilität und geringe Bruchanfälligkeit. Dies äußert sich beispielsweise bei Beschichtungen in einer hohen Blockfestigkeit bei gleichzeitig hoher Flexibilität, in Klebstoffen in einer hohen Kohäsion der Klebstoffschicht und bei polymergebundenen Faservliesen (Vliesstoffen) in einer hohen Temperaturstandfestigkeit. Vermutlich aufgrund der Reversibilität der Bindungsbildung wird die Lagerstabilität der erfindungsgemäßen Bindemittelzusammensetzungen, insbesondere der wässrigen Bindemittelzusammensetzungen, nicht negative beeinflusst.

Die anwendungstechnischen Eigenschaften von auf den erfindungsgemäßen Bindemittelzusammensetzungen basierenden Beschichtungsfilmen lassen sich durch Variation der Menge an Borsäure und/oder Borat modifizieren. Beispielsweise kann durch Optimieren der Boratmenge eine spezifische Eigenschaft von Beschichtungsmitteln, wie etwa die Haftung der Beschichtung auf dem Untergrund, maximiert werden, oder eine Gewichtung verschiedener Eigenschaften, wie etwa Adhäsion und Kohäsion eines Klebstoffs, oder die Temperaturstandfestigkeit und Flexibilität eines polymergebundenen Faservlieses den Anforderungen entsprechend vorgenommen werden.

Die erfindungsgemäßen Bindemittelzusammensetzungen eignen sich für eine Vielzahl von Anwendungen in denen man üblicherweise wässrige Polymerdispersionen als Bindemittel verwendet, z. B. Beschichtungsmitteln wie beispielsweise in Anstrichfarben für Innen und Außenanwendungen, in Papierstreichmassen, in Beschichtungssystemen für Leder und Textilien, in Druckfarben, in Beschichtungssystemen für mineralische Formkörper, in Primern zur Beschichtung von Metallen, als Bindemittel bei der Herstellung polymergebundener Faservliese, als Klebrohstoffe, als Additive für anorganische, hydraulische Bindemittel wie CaSO₄·0,5 H₂O, Anhydrid oder Zement, und den daraus hergestellten, hydraulischen bindende Massen wie Gips oder Beton, als Additive für Ton- oder Lehmbaustoffe, zur Herstellung von Membranen und dergleichen.

Die erfindungsgemäßen Bindemittelzusammensetzungen, insbesondere die wässrigen Bindemittelzusammensetzungen, kommen vorzugsweise in wässrigen Anstrichmitteln zum Einsatz. Dementsprechend betrifft ein weiterer Gegenstand der vorliegenden Erfindung die Verwendung der hier beschriebenen Bindemittelzusammensetzungen in Anstrichmittelformulierungen.

Die in den Anstrichmitteln zum Einsatz kommenden Bindemittelzusammensetzungen enthalten Polymere (P), deren Glasübergangstemperaturen T_{g} typischerweise im Bereich von 0 °C bis 50 °C, vorzugsweise im Bereich von 5 °C bis 45 °C und insbesondere im Bereich von 5 °C bis 40 °C liegt.

Die Anstrichmittelformulierungen können neben den Bindemittelzusammensetzungen weitere Zusatzstoffe enthalten, wie sie in Anstrichmitteln auf Basis wässriger Polymerdispersionen üblich sind. Hierzu zählen Pigmente, Füllstoffe, weitere Hilfsmittel und gegebenenfalls zusätzliche filmbildende Polymere.

Geeignete Pigmente sind beispielsweise anorganische Weißpigmente wie Titandioxid, vorzugsweise in der Rutilform, Bariumsulfat, Zinkoxid, Zinksulfid, basisches Bleicarbonat, Antimontrioxid, Lithopone (Zinksulfid + Bariumsulfat) oder farbige Pigmente, beispielsweise Eisenoxide, Ruß, Graphit, Zinkgelb, Zinkgrün, Ultramarin, Manganschwarz, Antimonschwarz, Manganviolett, Pariser Blau oder Schweinfurter Grün. Neben den anorganischen Pigmenten können die erfindungsgemäßen Dispersionsfarben auch organische Farbpigmente, z. B. Sepia, Gummigutt, Kasseler Braun, Toluidinrot, Pararot, Hansagelb, Indigo, Azofarbstoffe, anthrachinoide und indigoide Farbstoffe sowie Dioxazin, Chinacridon-, Phthalocyanin-, Isoindolinon- und Metallkomplexpigmente enthalten. Geeignet sind auch synthetische Weißpigmente mit Lufteinschlüssen zur Erhöhung der Lichtstreuung, wie die Rhopaque®-Dispersionen.

Geeignete Füllstoffe sind z. B. Alumosilicate, wie Feldspäte, Silicate, wie Kaolin, Talkum, Glimmer, Magnesit, Erdalkalicarbonate, wie Calciumcarbonat, beispielsweise in Form von Calcit oder Kreide, Magnesiumcarbonat, Dolomit, Erdalkalisulfate, wie Calciumsulfat, Siliciumdioxid etc. In Anstrichmitteln werden naturgemäß feinteilige Füllstoffe bevorzugt. Die Füllstoffe können als Einzelkomponenten eingesetzt werden. In der Praxis haben sich jedoch Füllstoffmischungen besonders bewährt, z. B. Calciumcarbonat/Kaolin, Calciumcarbonat/Talkum. Glänzende Anstrichmittel weisen in der Regel nur geringe Mengen sehr feinteiliger Füllstoffe auf oder enthalten keine Füllstoffe.

Feinteilige Füllstoffe können auch zur Erhöhung der Deckkraft und/oder zur Einsparung von Weißpigmenten eingesetzt werden. Zur Einstellung der Deckkraft des Farbtons und der Farbtiefe werden vorzugsweise Abmischungen aus Farbpigmenten und Füllstoffen eingesetzt.

Zu den üblichen Hilfsmitteln zählen, neben den bei der Polymerisation eingesetzten Emulgatoren, auch Netz- oder Dispergiermittel, wie Natrium-, Kalium- oder Ammoniumpolyphosphate, Alkalimetall- und Ammoniumsalze von Acrylsäure- oder Maleinsäureanhydridcopolymeren, Polyphosphonate, wie 1-Hydroxyethan-1,1-diphosphonsaures Natrium sowie Naphthalinsulfonsäuresalze, insbesondere deren Natriumsalze.

Weitere geeignete Hilfsmittel sind Verlaufsmittel, Entschäumer, Biozide, Verdicker und Filmbildehilfsmittel. Geeignete Verdicker sind z. B. Assoziativverdicker, wie Polyurethanverdicker. Die Menge des Verdickers beträgt vorzugsweise weniger als 1 Gew.-%, besonders bevorzugt weniger als 0,6 Gew.-%, bezogen auf den Feststoffgehalt des Anstrichmittels. Geeignete Filmbildehilfsmittel sind vor allem organische Lösungsmittel, welche die Filmbildetemperatur des Beschichtungsmittels herabsetzen. Hierzu zählen vor allem aromatische und aliphatische Kohlenwasserstofflösungsmittel und aliphatische Ester, insbesondere Dicarbonsäuredialkylester, wobei die Filmbildemittel typischerweise Siedepunkte (bei Normaldruck) im Bereich von 80 bis 250 °C aufweisen und in einer Menge von 0,5 bis 10 Gew.-%, bezogen auf das Polymer (P) eingesetzt werden.

Der Anteil der Pigmente kann durch die Pigmentvolumenkonzentration (PVK) beschrieben werden. Die PVK beschreibt das Verhältnis des Volumens an Pigmenten (V_{P}) und Füllstoffen (V_{F}) zum Gesamtvolumen, bestehend aus den Volumina an Bindemittel (V_{B}), Pigmenten und Füllstoffen eines getrockneten Beschichtungsfilms in Prozent: PVK = (V_{P} + V_{F}) x 100 / (V_{P} + V_{F} + V_{B}) (vgl. Ullmann's Enzyklopädie der technischen Chemie, 4. Auflage, Band 15, S. 667). Anstrichmittel lassen sich anhand der PVK beispielsweise wie folgt einteilen:

| | |
|---|---|
| hochgefüllte Innenfarbe, waschbeständig, weiß/matt | ca. ≥ 85 |
| Innenfarbe, scheuerbeständig, weiß/matt | ca. 60-85 |
| Halbglanzfarbe, seidenmatt | ca. 30-60 |
| Halbglanzfarbe, seidenglänzend | ca. 25-35 |
| Hochglanzfarbe | ca. 15-25 |
| Außenfassadenfarbe, weiß | ca. 45-55 |
| Klarlack | 0 |

Die erfindungsgemäßen Anstrichmittel können beispielsweise in Form eines unpigmentierten Systems (Klarlacks) oder eines pigmentierten Systems vorliegen.

Ein Gegenstand der Erfindung betrifft ein Anstrichmittel in Form einer wässrigen Zusammensetzung, enthaltend:
- wenigstens eine erfindungsgemäße Bindemittelzusammensetzung,
- wenigstens einen anorganischen Füllstoff und/oder wenigstens ein anorganisches Pigment,
- wenigstens ein übliches Hilfsmittel, und
- Wasser.

Bevorzugt ist ein Anstrichmittel, enthaltend:
- 10 bis 60 Gew.-% wenigstens eine erfindungsgemäße Bindemittelzusammensetzung (Polymergehalt 40 bis 75 Gew.-%),
- 10 bis 70 Gew.-% anorganische Füllstoffe und/oder anorganische Pigmente,
- 0,1 bis 20 Gew.-% übliche Hilfsmittel, und
- Wasser ad 100 Gew.-%.

Eine Ausführungsform der vorliegenden Erfindung sind Anstrichmittel in Form einer Dispersionsfarbe. Dispersionsfarben enthalten in der Regel 30 bis 75 Gew.-% und vorzugsweise 40 bis 65 Gew.-% nichtflüchtige Bestandteile. Hierunter sind alle Bestandteile der Zubereitung zu verstehen, die nicht Wasser sind, zumindest aber das Gesamtgewicht an Bindemittel, Füllstoff, Pigment, schwerflüchtigen Lösungsmitteln (Siedepunkt oberhalb 220 °C), z. B. Weichmacher, und polymere Hilfsmittel. Davon entfallen etwa
a) 3 bis 90 Gew.-%, insbesondere 10 bis 60 Gew.-%, auf die erfindungsgemäße Polymerdispersion (PD) (Polymergehalt 40 bis 75 Gew.-%),
b) 0 bis 85 Gew.-%, bevorzugt 5 bis 60 Gew.-%, insbesondere 10 bis 50 Gew.-%, auf wenigstens ein anorganisches Pigment,
c) 0 bis 85 Gew.-%, insbesondere 5 bis 60 Gew.-%, auf anorganische Füllstoffe und
d) 0,1 bis 40 Gew.-%, insbesondere 0,5 bis 20 Gew.-%, auf übliche Hilfsmittel.

Die erfindungsgemäßen Bindemittelzusammensetzungen eignen sich insbesondere zur Herstellung von Fassadenfarben mit einer PVK im Bereich von 30 bis 65 oder Innenfarben mit einer PVK im Bereich von 65 bis 80. Des Weiteren sind Sie besonders geeignet zur Herstellung von Seidenglanz- oder einer Hochglanzfarben, die z. B. eine PVK im Bereich von 12 bis 35 %, vorzugsweise 15 bis 30 % haben.

Die Herstellung der erfindungsgemäßen Anstrichmittel erfolgt in bekannter Weise durch Abmischen der Komponenten in hierfür üblichen Mischvorrichtungen. Es hat sich bewährt, aus den Pigmenten, Wasser und gegebenenfalls den Hilfsmitteln eine wässrige Paste oder Dispersion zu bereiten, und anschließend erst das polymere Bindemittel, d. h. in der Regel die wässrige Dispersion des Polymeren mit der Pigmentpaste bzw. Pigmentdispersion zu vermischen.

Das erfindungsgemäße Anstrichmittel kann in üblicher Weise auf Substrate aufgebracht werden, z. B. durch Streichen, Spritzen, Tauchen, Rollen, Rakeln etc.

Das erfindungsgemäße Anstrichmittel wird vorzugsweise als Bautenanstrichmittel, d. h. zum Beschichten von Gebäuden oder Gebäudeteilen verwendet. Es kann sich dabei um mineralische Untergründe wie Putze, Gips- oder Gipskartonplatten, Mauerwerk oder Beton, um Holz, Holzwerkstoffe, Metall oder Papier, z. B. Tapeten oder Kunststoff, z. B. PVC, handeln.

Bevorzugt ist der Einsatz der erfindungsgemäßen Anstrichmittel zur Beschichtung von Gebäudeinnenteilen, z. B. Innenwänden, Innentüren, Vertäfelungen, Treppengeländer, Möbel etc.

Die erfindungsgemäßen Anstrichmittel zeichnen sich durch einfache Handhabung, gute Verarbeitungseigenschaften und hohes Deckvermögen aus. Die Anstrichmittel sind zudem schadstoffarm. Sie haben gute anwendungstechnische Eigenschaften, z. B. eine gute Wasserfestigkeit, gute Nasshaftung, gute Blockfestigkeit, eine gute Überstreichbarkeit und sie zeigen beim Auftragen einen guten Verlauf. Die Anstrichmittel sind auch bestens zur Herstellung antikorrosiver Beschichtungen geeignet.

Die aus den erfindungsgemäßen Anstrichmitteln hergestellten Anstriche zeichnen sich durch gute Haftung bei gleichzeitiger guter Scheuerfestigkeit aus. Die besagten Anstriche weisen zudem im Allgemeinen eine hohe Flexibilität und eine geringe Brüchigkeit auf, die es ihnen z. B. ermöglicht, sich einem arbeitenden Untergrund anzupassen.

Des Weiteren kommen die erfindungsgemäßen Bindemittelzusammensetzungen vorzugsweise in Klebstoffen zum Einsatz. Dementsprechend betrifft ein weiterer Gegenstand der vorliegenden Erfindung die Verwendung der hier beschriebenen Bindemittelzusammensetzungen in Klebstoffformulierungen.

Die Klebstoffformulierungen werden vorzugsweise mit wässrigen Bindemittelzusammensetzungen hergestellt und können alleinig aus diesen bestehen. Die Klebstoffformulierungen können jedoch neben den wässrigen Bindemittelzusammensetzungen auch weitere Zusatzstoffe enthalten, wie sie in Klebstoffen auf Basis wässriger Polymerdispersionen üblich sind. Hierzu zählen Füllstoffe, Farbstoffe, einschließlich Pigmenten, Verlaufsmittel, Verdicker, Biozide und gegebenenfalls weitere Hilfsmittel. Beispiele für solche Zusatzstoffe wurden zuvor bereits genannt. Weitere für die Klebstoffformulierungen geeignete Additive sind beispielsweise Abbindeverzögerer, wie etwa Natriumgluconat, sowie Tackifier (klebrig machende Harze). Die Klebstoffformulierungen können darüber hinaus zusätzliche, anwendungsspezifische Additive enthalten, wie beispielsweise Zement in Klebstoffen für Fliesen und ähnliche Boden- und Wandbeläge.

Tackifier sind z. B. Naturharze, wie Kolophoniumharze und daraus durch Disproportionierung, Isomerisierung, Polymerisation, Dimerisation oder Hydrierung hergestellten Derivate. Diese können in ihrer Salzform (mit z. B. ein- oder mehrwertigen Gegenionen) oder bevorzugt in ihrer veresterten Form vorliegen. Alkohole, die zur Veresterung verwendet werden, können ein- oder mehrwertig sein. Beispiele sind Methanol, Ethandiol, Diethylenglykol, Triethylenglykol, 1,2,3-Propantriol, Pentaerythrit. Des Weiteren finden als Tackifier auch Kohlenwasserstoffharze, z. B. Cumaron-Inden-Harze, Polyterpen-Harze, Kohlenwasserstoffharze auf Basis ungesättigter CH-Verbindungen, wie Butadien, Penten, Methylbuten, Isopren, Piperylen, Divinylmethan, Pentadien, Cyclopenten, Cyclopentadien, Cyclohexadien, Styrol, α-Methylstyrol und Vinyltoluol Verwendung. Als Tackifier können auch Polyacrylate, welche ein geringes Molgewicht aufweisen, verwendet werden. Vorzugsweise haben diese Polyacrylate ein gewichtsmittleres Molekulargewicht M_{w} unter 30000. Die Polyacrylate bestehen bevorzugt zu mindestens 60, insbesondere mindestens 80 Gew.-% aus C₁-C₈ Alkyl(meth)acrylaten. Bevorzugte Tackifier sind natürliche oder chemisch modifizierte Kolophoniumharze. Kolophoniumharze bestehen zum überwiegenden Teil aus Abietinsäure oder Abietinsäurederivaten. Die Gewichtsmenge der Tackifier beträgt vorzugsweise 0 bis 100 Gew.-Teile. besonders bevorzugt 0 bis 50 Gew.-Teile. bezogen auf 100 Gew.-Teile Polymer (fest/fest).

Die erfindungsgemäßen Klebstoffe können einen oder mehrere Tackifier enthalten oder frei von Tackifier sein. Falls ihnen Tackifier zugesetzt sind, ersetzen diese in der Regel einen Teil des Polymers (P).

Die für die erfindungsgemäßen Klebstoffformulierungen verwendeten wässrigen Polymerdispersionen weisen in der Regel einem Feststoffgehalt von 45 bis 80 Gew.-%, vorzugsweise von 50 bis 75 Gew.-% und insbesondere von 55 bis 72 Gew.-% auf.

Ein Gegenstand der Erfindung betrifft einen Klebstoff in Form einer wässrigen Zusammensetzung, enthaltend:
- 20 bis 70 Gew.-% wenigstens eine Bindemittelzusammensetzung der Erfindung (Polymergehalt 45 bis 80 Gew.-%),
- 0 bis 60 Gew.-% wenigstens einen anorganischen Füllstoff und/oder wenigstens ein anorganisches Pigment,
- 0 bis 30 Gew.-% wenigstens ein weiteres Hilfsmittel, und
- Wasser ad 100 Gew.-%.

Die erfindungsgemäßen Bindemittelzusammensetzungen und Klebstoffe eignen sich grundsätzlich für die Herstellung von Klebstoffbeschichtungen auf beliebigen Substraten wie Papiere, Kunststoffe, z. B. PVC, mineralischen Untergründen wie Putze, Gips- oder Gipskartonplatten, Mauerwerk oder Beton, Holz, Holzwerkstoffe oder Metall.

Die Stärke der Haftklebstoffbeschichtung hängt vom gewünschten Anwendungszweck ab und liegt typischerweise im Bereich von 1 bis 500 µm, insbesondere im Bereich von 2 bis 250 µm oder 5 bis 200 µm, entsprechend einer Beschichtung von 1 bis 500 g/m², insbesondere 2 bis 250 g/m² und speziell 5 bis 200 g/m².

Die Bindemittelzusammensetzungen bzw. Klebstoffe können mittels üblicher Methoden, z. B. durch Rollen, Rakeln, Streichen, Gießen etc. auf die zu beschichteten Substrate aufgebracht werden. Es ist auch möglich die Polymerdispersionen bzw. Haftklebstoffe zunächst auch auf eine Release-Folie, z. B. ein Release-Papier, aufzubringen und mit diesem die Haftklebstoffschicht auf das gewünschte Substrat zu übertragen. Das in den Zusammensetzungen enthaltene Wasser wird typischerweise in üblicher Weise entfernt, z. B. durch Trocknen bei Temperaturen im Bereich von 10 bis 150 °C, insbesondere im Bereich von 15 bis 100 °C.

Die erfindungsgemäßen Bindemittelzusammensetzungen und Klebstoffe eignen sich insbesondere zur Verklebung von flexiblen Fußbodenbelägen, wie etwa textilen Bodenbelägen, z. B. Teppichböden, Linoleum-, Gummi-, Polyolefin-, CV- und PVC-Belägen, als auch starren Fußbodenbelägen, wie etwa Parkett und Fliesen. Sie werden daher bevorzugt zum Verkleben dieser Fußbodenbeläge auf insbesondere den oben erwähnten mineralischen Unterlagen oder Unterlagen aus Holz oder Holzwerkstoffen, eingesetzt.

Die Glasübergangstemperaturen T_{g} der für die erfindungsgemäßen Fußbodenklebstoffe verwendeten Polymere (P) ist im Falle der Klebstoffe für flexible Beläge typischerweise < -5 °C, vorzugsweise < -10 °C und insbesondere < -15 °C, sowie im Falle der Klebstoffe für starre Beläge, insbesondere Parkett, typischerweise < 20 °C, vorzugsweise < 15 °C und insbesondere < 10 °C.

Die erfindungsgemäßen Klebstoffe haben sehr gute Klebeeigenschaften, insbesondere eine gute Adhäsion zu den zu verklebenden Substraten und eine hohe Kohäsion (innere Festigkeit in der Klebstoffschicht). Sie sind außerdem einfach zu handhaben und haben gute Verarbeitungseigenschaften. Hinsichtlich der Verklebung von flexiblen Fußbodenbelägen sind sie gegenüber Klebstoffen des Standes der Technik durch deutlich erhöhte Schälfestigkeit bei gleichbleibend guten weiteren Eigenschaften, insbesondere des Nassanfassvermögens und des Trockenanfassvermögens, ausgezeichnet. Hinsichtlich ihrer Verwendung als Klebstoff für starre Bodenbeläge, weisen erfindungsgemäßen Klebstoffe eine verbesserte Endfestigkeit auf.

Die erfindungsgemäße Verwendung von Borsäure und/oder Borat zur externen Polymervernetzung ermöglicht es auch, die Klebstoffe der Erfindung als lagerstabile EinKomponenten-Formulierungen zu formulieren. Im Gegensatz dazu muss bei Klebstoffen des Standes der Technik der kovalente Bindungen ausbildende Vernetzer in einer zweiten, separaten Komponente gelagert werden, da er ansonsten zum vorzeitigen irreversiblen Aushärten führen würde.

Die erfindungsgemäßen Bindemittelzusammensetzungen eignen sich insbesondere auch zur Herstellung von polymergebundenen Faservliesen bzw. Vliesstoffen.

Zur Herstellung von polymergebundenen Faservliesen wird beispielsweise ein ungebundenes Faservlies mit mindestens einer erfindungsgemäßen wässrigen Bindemittelzusammensetzung behandelt. Die wässrige Bindemittelzusammensetzung wird hierzu in der Regel in einer Menge von 0,5 bis 30, vorzugsweise 1,5 bis 20 Gew.-%, bezogen auf das Gewicht des Vlieses und gerechnet als Feststoffgehalt der Bindemittelzusammensetzung, eingesetzt. Das Bindemittel dient zur Verfestigung der Faservlieses. Die Behandlung des ungebundenen Faservlieses kann beispielsweise durch Sprühen, Tauchen, Imprägnieren oder Pflatschen oder durch Behandeln des Faservlieses mit einer Bindemittelzusammensetzung in Form eines Schaums erfolgen.

Die ungebundenen Faservliese können aus natürlichen und/oder synthetischen Fasern bestehen. Beispiele für natürliche Fasern sind Cellulosefasern unterschiedlicher Herkunft wie Zellstoff und Zellwolle sowie Fasern aus Baumwolle, Hanf, Jute, Sisal und Holz, Wolle, sowie Mischungen aus mindestens zwei der genannten Faserarten. Bevorzugt eingesetzte Fasern aus der Gruppe sind Fasern aus Jute, Sisal und Holz. Beispiele für synthetische Fasern sind Viskose-, Polyester-, Polyamid-, Polypropylen-, Polyethylen-, Polyacrylnitril und Polyvinylchloridfasern sowie Kohlenstofffasern, Glasfasern, Keramikfasern und Mineralfasern sowie Mischungen aus mindestens zwei der genannten Faserarten. Vorzugsweise verwendet man zur Herstellung der gebundenen Faservliese Polyesterfasern sowie Mischungen aus Polyesterfasern und Glasfasern. Polyesterfasern können aus recyceltem Material durch Schmelzspinnen gewonnen und für die Herstellung eines Trägervlieses eingesetzt werden. Die Vliese können z. B. aus Stapelfasern oder aus gesponnenen Fasern sowie Mischungen dieser Faserarten bestehen. Ungebundene Faservliese werden bekanntlich mechanisch durch Vernadelung oder Wasserstrahlverfestigung eines nass- bzw. luftgelegten Vlieses hergestellt. Die Vliese haben beispielsweise ein Flächengewicht von 10 bis 700 g/m², vorzugsweise von 50 bis 500 g/m². Meistens beträgt das Flächengewicht der noch nicht verfestigten Vliese 75 bis 300 g/m².

Die mit der erfindungsgemäßen Bindemittelzusammensetzung behandelten Faservliese werden zur Verfestigung auf Temperaturen von in der Regel im Bereich von 100 °C bis 230 °C, vorzugsweise 120 bis 210 °C erhitzt. Die Dauer des Erhitzens hängt im Wesentlichen von der Temperatur, dem Wassergehalt und der jeweiligen Faser ab, aus dem das Faservlies besteht. Meistens erhitzt man die mit der erfindungsgemäßen Bindemittelzusammensetzung behandelten Faservliese 0,5 bis 5, vorzugsweise 1,5 bis 3 Minuten. Während des Erhitzens erweicht zunächst Wasserdampf, gleichzeitig damit oder anschließend verfilmt das in der Bindemittelzusammensetzung enthaltene Polymere P und vernetzt mit der Borsäure bzw. ihren Salzen.

Im Falle der Verwendung als Bindemittel für Faservliese können die erfindungsgemäßen Bindemittelzusammensetzungen noch übliche Zusatzstoffe, wie feinteilige inerte Füllstoffe, wie Aluminiumsilikate, Quarz, gefällte oder pyrogene Kieselsäure, Leicht- und Schwerspat, Talkum, Dolomit oder Calciumcarbonat; farbgebende Pigmente, wie Titanweiß, Zinkweiß, Eisenoxidschwarz etc., Schauminhibitoren; Schaumbildner, Verdickungsmittel; Konservierungsmittel; Gleitmittel und/oder Benetzungsmittel enthalten.

Für bestimmte Anwendungsfelder ist es vorteilhaft, anstelle der erfindungsgemäßen wässrigen Bindemittelzusammensetzung eine feste pulverförmige Bindemittelzusammensetzung zu verwenden, die ein wasserunlösliches Polymer (P), wie hier definiert und Borsäure oder ein Salz der Borsäure enthalten. Derartige Pulver können beispielsweise hergestellt werden, indem Wasser und gegebenenfalls weitere flüchtige Komponenten aus der wässrigen Bindemittelzusammensetzung, vorzugsweise durch ein konventionelles Trocknungsverfahren zur Pulverherstellung, insbesondere durch ein Sprühtrocknungsverfahren, entfernt werden. Alternativ kann man eine wässrige Dispersion des Polymeren durch ein geeignetes Trocknungsverfahren zunächst in ein Pulver überführen und während oder im Anschluss an das Trocknungsverfahren das Pulver mit der gewünschten Menge an Borsäure oder einem Salz davon versetzen. Diese festen pulverförmigen Bindemittelzusammensetzungen kommen beispielsweise in anorganischen, hydraulisch abbindenden Bindemitteln wie Calciumsulfa-Semihydrat, Anhydrit oder Zement, zum Einsatz, da sie den daraus hergestellten Bindebaustoffen wie Beton, Zementputzen, bzw. Gipshaltigen Materialien vorteilhafte Materialeigenschaften, insbesondere verbesserte Festigkeit, wie Zug- und Reißfestigkeit, verleihen.

Die folgenden Beispiele und die Abbildungen dienen der Veranschaulichung der Erfindung.

Abbildung 1 zeigt die mittels Dynamisch-Mechnischer Analyse ermittelten Speichermodule für die aus den Dispersionen der Beispiele 5 (VD5, ohne Borat) und 6 (VD6, mit Borat) hergestellten Polymerfilme in Abhängigkeit von der Temperatur.

Abbildung 2 zeigt die mittels Dynamisch-Mechnischer Analyse ermittelten Speichermodule für die aus den Dispersionen der Vergleichsbeispiele 3 (VD3 ohne Borat) und 4 (VD4, mit Borat) hergestellten Polymerfilme in Abhängigkeit von der Temperatur.

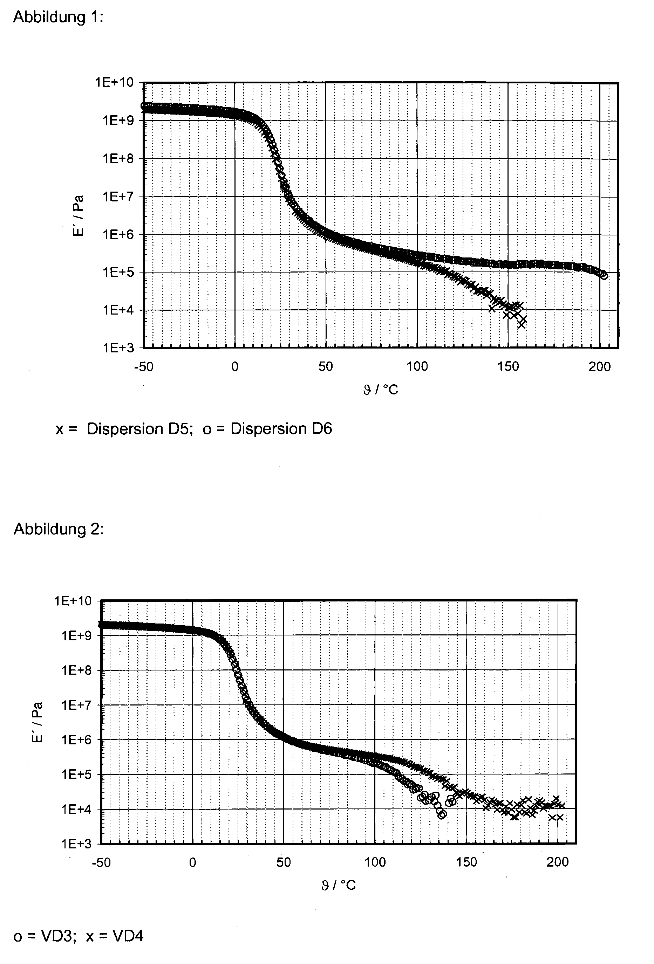

Aus Abbildung 1 ist zu erkennen, dass durch den Zusatz der Borsäure (Beispiel 6) das Speichermodul des Polymerfilms bei Temperaturen oberhalb 90 °C signifikant erhöht und dieses Niveau bei Temperaturen bis etwa 200 °C erhalten bleibt, wohingegen ohne den Zusatz von Borsäure/Borat das Niveau bei 150 °C auf etwa 1/10 des Wertes bei 100 °C abgefallen ist. Der Vergleich von Abbildung 1 mit Abbildung 2 wiederum zeigt, dass bei Polymeren, die Monomere mit nur 1 Hydroxylgruppe einpolymerisiert enthalten, der Zusatz von Borsäure/Borat zwar eine Anhebung des Speichermodul des Polymerfilms bei Temperaturen oberhalb 90 °C in signifikanter Weise bewirkt, das Niveau jedoch bereits bei Temperaturen unterhalb 130 °C stark absinkt und bereits bei 160 °C auf etwa 1/10 des Wertes bei 100 °C abgefallen ist. Zudem zeigt sich, dass das Polymere, die Monomere mit vicinalen OH-Gruppen einpolymerisiert enthalten, im Vergleich zu Polymeren, die Monomere mit nur einer OH-Gruppe einpolymerisiert enthalten, bei Temperaturen oberhalb 100 °C ein signifikant höheres Speichermodul aufweisen.

### I Analytik

### Bestimmung der Lösungsmittelaufnahme und des Gelgehaltes

Es wurden 42 g der jeweiligen Dispersion (mit Wasser auf 25 % verdünnt) in eine Kautschukform mit einer Grundfläche von 15 cm x 7 cm gegossen. Man ließ die Dispersion bei 20 °C verfilmen und trocknete den entstandenen Polymerfilm anschließend zwei Wochen bei 20 °C auf einer Gaze. Es wurde ein Probekörper mit 0,5 bis 1 g aus dem wie oben hergestellten und getrockneten Polymerfilm geschnitten. Der Probekörper wurde gewogen (m1) und in einem verschließbaren Schraubdeckelglas mit 100 ml des Lösungsmittels versetzt. Nach einer Lagerung des Probenkörpers über 24 Stunden in dem Lösungsmittel wurde der Probenkörper aus dem Lösungsmittel entfernt und im nassen Zustand gewogen (m2). Im Anschluss wurde der nasse Probenkörper über 48 Stunden bei Zimmertemperatur und anschließend für 48 Stunden bei 60 °C im Trockenschrank getrocknet und die Masse des getrockneten Probenkörpers bestimmt (m3). Der Gelgehalt wurde berechnet aus (m3/m1) x 100 %. Die Lösungsmittelaufnahme wurde berechnet aus ((m2-m1)/m1) x 100 %.

### Bestimmung der Pendelhärte

Die jeweilige Dispersion wurde mit einer Nassschichtdicke von 250 µm auf Glas aufgetragen und 24 h bei 50 °C getrocknet. Anschließend wurde nach DIN 53157die Pendelhärte nach König bestimmt

### Bestimmung der Lichtdurchlässigkeit

Die Bestimmung der Lichtdurchlässigkeit (LD-Wert) erfolgte photometrisch mit einem Photometer an 0,01 gew.-%igen Verdünnung der Dispersion bei 23 °C.

### Bestimmung des mittleren Teilchendurchmessers

Die Bestimmung der mittleren Teilchendurchmesser erfolgte mit Hilfe der Photonenkorrelationsspektroskopie (PCS), auch als quasielastische Lichtstreuung (QELS) oder Dynamische Lichtstreuung bekannt. Die Meßmethode ist in der ISO13321-Norm beschrieben. Die Bestimmung wurde mit einem HPPS (High Performance Particle Sizer) durchgeführt. Hierzu wurde eine stark verdünnte wässrige Polymerdispersion (c ~ 0,005 %) untersucht. Messkonfiguration :HPPS von der Fa. Malvern, automatisiert mit Durchflussküvette und Gilson-Autosampler. Parameter: Messtemperatur 22,0 °C; Messzeit 120 Sekunden (6 Zyklen mit je 20 s ); Streuwinkel 173°; Wellenlänge Laser 633 nm (HeNe); Brechungsindex Medium 1,332 (wässrig); Viskosität 0,9546 mPas. Die Messung lieferte einen Mittelwert der Kumulantenanalyse (mean of fits). Bei dem mean of fits handelt es sich um einen mittleren intensitätsgewichteten Partikeldurchmesser in nm, der dem volumen- bzw. massenmittleren Teilchendurchmesser entspricht.

Die Bestimmung der mittleren Teilchendurchmesser kann alternativ nach der von H. Cölfen, "Analytical Ultracentrifugation of Nanoparticles" in Encyclopedia of Nanoscience and Nanotechnology, (American Scientific Publishers, 2004), S. 67-88 beschriebenen Methode erfolgen. Hierzu wird eine 0,1 bis 0,5 gew.-%ige Verdünnung (bez. auf Feststoffgehalt, Lichtdurchlässigkeit etwa 10 %) der Polymerdispersion mittels Ultrazentrifuge (Typ Beckmann Model XL) in einer Sedimentationsfeldrampe von 600 bis 40000 U/min entsprechend einer Beschleunigung von 2250 bis 150000 g unter Verwendung einer Trübungsoptik bei 23 °C untersucht (siehe auch W. Mächtle und L. Börger in "Analytical Ultracentrifugation of Polymers and Nanoparticles", (Springer, Berlin, 2006), W. Mächtle in Analytical Ultracentrifugation in Biochemistry and Polymer Science: S. E. Härting et al. (Herausgeber), Cambridge: Royal Society of Chemistry, 1992, S. 147-175 bzw. in W. Mächtle, Makromolekulare Chemie 185 (1984), Seite 1025 - 1039). Als Verdünnungsmittel diente D₂0 mit ca. 0,1 bis 0,5 g/l, z. B. 0,5 g/l Emulgator K30 (Natriumsalz eines Alkansulfonats).

### Bestimmung der Viskosität

Die Bestimmung der Viskosität nach Brookfield erfolgte in Anlehnung an DIN EN ISO 3219 mittels eines Rotationsviskosimeters (Rheometer Physica MCR 301 mit Probenwechsler und Meßsystem CC27 der Fa, Anton Paar) bei 23° und einem Schergefälle von 0 bis 500 sec⁻¹). Angegeben ist der Wert bei 100 sec⁻¹.

### Dynamisch-Mechanische Analyse (DMTA)

Die Dynamisch-Mechanische Analyse (DMTA) wurden mit einem Rheometrics Solids Analyzer RSA II in einem Messtemperaturbereich von -30 °C bis +200 °C; einer Heizrate von 2 °C/min und einer Frequenz f von 1 Hz vorgenommen. Für die zu vermessenden Dispersionsfilme wurden die Speichermodule E', die Verlustmodule E" und tan δ bestimmt (Probengeometrie: 34,5 mm Länge, 6,0 mm Breite, zwischen 0,645 und 0,975 mm Dicke). Die Messungen wurden graphisch durch Auftragen von E', E" und tan δ gegen die Temperatur dargestellt. Aus den E"-Graphen ließ sich die Glasübergangstemperatur T_{g} bestimmen.

### II Herstellung der Polymerdispersionen

| | |
|---|---|
| Emulgator 1: | Alkyldiphenyloxiddisulfonat (Dowfax^{®} 2A1,); |
| Emulgator 2: | C₁₃-Oxoalkoholpolyethoxylat mit 8 Ethylenoxid-Einheiten, 20 % in Wasser; |
| Emulgator 3: | Ethoxylat sekundärer C₁₁-C₁₅-Alkanole mit 12 Ethylenoxideinheiten: Softanol 120 (Tergitol 15-S-12, Fa. Dow), |
| Emulgator 4: | alpha-Sulfo-omega-[1-(alkoxy)methyl-2-(2-propenyloxy)ethoxy]-poly(oxy-1,2-ethandiyl), Ammoniumsalz (Adeka Reasoap SR-1025:) |
| Biozid 1: | Acticid MBS, Fa. Thor, Gemisch aus Methyl-4-isothiazolin und 1,2-Benzisothiazolin-3-on |
| Biozid 2: | Acticid MV, Fa. Thor, Gemisch aus Chlormethylisothiazolinon und Methylisothiazolinon |

### Beispiel 1 (Dispersion D1)

In einem mit Dosiervorrichtung, Rührwerk und Temperaturregelung ausgerüsteten Polymerisationsgefäß wurden 163 g entionisiertes Wasser und 27,8 g Polystyrolsaatlatex (mit gewichtsmittlerer Teilchengröße von 30 nm und einem Feststoffgehalt von 32,4 Gew.-%) vorgelegt. Dann spülte man die Apparatur mit Stickstoff und erhitze die Vorlage auf 95 °C. Unter Aufrechterhaltung dieser Temperatur gab man 2,06 g wässrige Natriumperoxodisulfatlösung (7 Gew.-% Feststoffgehalt) zu und ließ 5 Minuten rühren. Dann dosierte man 18,5 g wässrige Natriumperoxodisulfatlösung (7 Gew.-% Feststoffgehalt) und parallel dazu die kontinuierlich gerührte Monomeremulsion, bestehend aus 260 g Wasser, 12,0 g Emulgator 1 (Feststoffgehalt 45 Gew.-%), 36,0 g Emulgator 2 (Feststoffgehalt 20 Gew.-%), 9,60 g Methacrylsäure, 314 g Methymethacrylat, 252 g n-Butylacrylat und 24,0 g einer Mischung aus 1-Methacrylamido-2-D-gluconylamino-ethan (Massenanteil 89 Gew.-%) und Methacrylsäure (Massenanteil 11 Gew.-%) innerhalb von 165 Minuten mit gleichbleibender Zulaufrate zu. Nach Beendigung der Zuläufe wurde der Zulaufbehälter für die Monomeremulsion mit 20,8 g Wasser in das Polymerisationsgefäß gespült. Anschließend wurde bei 95 °C noch 15 min gerührt bevor man 2,40 g wässrige Ammoniaklösung (Feststoffgehalt 25 Gew.-%) zugab. Im Anschluss wurde eine Mischung aus 3,60 g wässrige tert-Butylhydroperoxidlösung (Feststoffgehalt 10 Gew.-%) und 12,0 g entionisiertes Wasser und parallel dazu eine Mischung aus einer wässrigen Lösung von 4,58 g Acetonbisulfit (Feststoffgehalt 13,1 Gew.-%) und 12,0 g entionisiertes Wasser innerhalb von 60 Minuten unter konstanter Zulaufrate zudosiert. Danach wurde die Reaktionsmischung noch 15 Minuten bei 95 °C gerührt, bevor man 54,0 g entionisiertes Wasser zugab und die erhaltene Reaktionsmischung auf 30 °C abgekühlte. Nach Erreichen einer Temperatur von 30 °C wurden nacheinander 7,80 g wässrige Natronlauge (Feststoffgehalt 10 Gew.-%), 3,60 g Biozid 1 (Feststoffgehalt 5 Gew.-%) und 1,12 g Biozid 2 (Feststoffgehalt 1,5 Gew.-%) zugegeben.

Man erhielt eine Polymerdispersion mit einem Feststoffgehalt von 50,6 %, einem pH-Wert von 8,2 und einer mittleren Teilchengröße von 123 nm (HPPS). Der Gelanteil in THF lag bei 84 % und die THF-Aufnahme betrug 740 %. Die Pendelhärte war 34 s. Das über DMTA-Analyse ermittelte Speichermodul beträgt 78,7 x 10⁵ Pa (60 °C), 11,8 x 10⁵ Pa (100 °C), 2,54 x 10⁵ Pa (150 °C), die aus dem Maximum des Verlustmoduls bestimmte Glasübergangstemperatur T_{g} lag bei 31 °C.

### Beispiel 2 (Dispersion D2)

Die Herstellung erfolgte wie für Beispiel 1 beschrieben, wobei als Monomere 7,20 g Methacrylsäure, 292 g Methylmethacrylat und 48,0 g der Mischung aus 1-Methacrylamido-2-D-gluconylaminoethan (Masseanteil 89 %) und Methacrylsäure (Massenanteil 11 Gew.-%) verwendet wurden.

Man erhielt eine Polymerdispersion mit einem Feststoffgehalt von 49,8 %, einem pH-Wert von 8,2 und einer mittleren Teilchengröße von 130 nm (HPPS). Der Gelanteil in THF lag bei 90 % und die THF-Aufnahme betrug 480 %. Die Pendelhärte war 28 s. Das über DMTA-Analyse ermittelte Speichermodul betrug 207 x 10⁵ Pa (60 °C), 36,6 x 10⁵ Pa (100 °C), 4,54 x 10⁵ Pa (150 °C), die aus dem Maximum des Verlustmoduls bestimmte Glasübergangstemperatur T_{g} lag bei 25 °C.

### Beispiel 3 (Dispersion D3)

Zu der Polymerdispersion D1 gab man 67,2 g einer wässrigen Lösung von Di-Natriumtetraborat-decahydrat (Feststoffgehalt 5 Gew.-%).

Der Gelanteil in THF lag bei 97 % und die THF-Aufnahme betrug 470 %. Die Pendelhärte war 38 s. Das über DMTA-Analyse ermittelte Speichermodul betrug 157 x 10⁵ Pa (60 °C), 54,7 x 10⁵ Pa (100 °C), 15,4 x 10⁵ Pa (150 °C), die aus dem Maximum des Verlustmoduls bestimmte Glasübergangstemperatur T_{g} lag bei 31 °C.

### Beispiel 4 (Dispersion D4)

Zu 200 g der Polymerdispersion D2 wurden unter Durchmischung 21,6 g einer wässrigen Lösung von Di-Natriumtetraborat-decahydrat (Feststoffgehalt 5 Gew.-%) gegeben.

Der Gelanteil in THF lag bei 93 % und die THF-Aufnahme betrug 300 %. Die Pendelhärte war 34 s. Das über DMTA-Analyse ermittelte Speichermodul beträgt 389 x 10⁵ Pa (60 °C), 310 x10⁵ Pa (100 °C), 144 x 10⁵ Pa (150 °C), die aus dem Maximum des Verlustmoduls bestimmte Glasübergangstemperatur T_{g} lag bei 25 °C.

### Beispiel 5 (Dispersion D5)

In einem mit Dosiereinrichtungen, Temperaturregelung und Ankerrührer ausgerüstetem 2-I Polymerisationsgefäß wurden bei Raumtemperatur unter Stickstoffatmosphäre 422,5 g entionisiertes Wasser, 6,25 g Emulgator 3, 5 g Emulgator 4 vorgelegt und die Mischung wurde unter Rühren aufgeheizt. Beim Erreichen einer Innentemperatur von 85 °C wurde eine Initiatorlösung aus 2,5 g Ammoniumpersulfat, 1,25 g Natriumcarbonat in 58,8 g entionisiertem Wasser zugegeben und die Innentemperatur im weiteren Verlauf bei 85 °C gehalten. Fünf Minuten nach der Zugabe dieser Initiatorlösung wurden die beiden Zuläufe Z1 und Z2 parallel innerhalb von 60 min mit konstanter Geschwindigkeit unter Rühren zudosiert. Anschließend wurden die Zuläufe Z3 und Z4 innerhalb von 50 min mit konstanter Geschwindigkeit parallel zudosiert. Abschließend wurden zur Nachpolymerisation innerhalb von 30 min bei 85 °C die Zuläufe Z5 und Z6 parallel zudosiert und danach auf Raumtemperatur abgekühlt.

| Z1 | |
|---|---|
| 89,4 g | entionisiertes Wasser |
| 45 g | Emulgator 4 |
| | |

| Z2 | |
|---|---|
| 125 g | n-Butylacrylat |
| 125 g | Styrol |

| Z3 | |
|---|---|
| 55,9 | entionisiertes Wasser |
| 25 g | Glykosidacrylat |
| | |

| Z4: | |
|---|---|
| 125 g | n-Butylacrylat |
| 125 g | Methylmethacrylat |
| | |

| Z5 | |
|---|---|
| 4 g wässrige Acetonbisulfit-Lösung 13 gew.-%ig | |
| | |

| Z6 | |
|---|---|
| 3 g wässrige t-Butylhydroperoxidlösung 10 gew.-%ig | |

Man erhielt eine Polymerdispersion mit einem Feststoffgehalt von 42,9 Gew.-%, einem pH-Wert von 8,6 und einer mittleren Teilchengröße von 94 nm (dynamische Lichtstreuung). Der Gelanteil in Toluol lag bei 20 % und die Toluol-Aufnahme betrug 20 %. Das über DMTA-Anaylse ermittelte Speichermodul betrug 6 x 10⁵ Pa (60 °C), 2 x 10⁵ Pa (100 °C), 1 x 10⁴ Pa (150 °C), die aus dem Maximum des Verlustmoduls bestimmte Glasübergangstemperatur T_{g} lag bei 17 °C. Die Viskosität nach Brookfield betrug 70 mPa·s.

### Beispiel 6 (Dispersion D6)

100 g der Dispersion D5 wurden mit 1,24 g einer 10 gew.-%igen Di-Natriumoctaborat-Tetrahydrat-Lösung versetzt

Man erhielt eine Polymerdispersion mit einem Feststoffgehalt von 42,6 Gew.-%, einem pH-Wert von 8,5 und einer mittleren Teilchengröße von 96 nm (dynamische Lichtstreuung). Der Gelanteil in Toluol lag bei 65 % und die Toluol-Aufnahme betrug 65 %. Das über DMTA-Anaylse ermittelte Speichermodul betrug 7,5 x 10⁵ Pa (60 °C), 3,0 x 10⁵ Pa (100 °C), 1,2 x 10⁵ Pa (150 °C), die aus dem Maximum des Verlustmoduls bestimmte Glasübergangstemperatur T_{g} lag bei 18 °C.

### Herstellungsbeispiel 7 (Dispersion D7)

In einem mit Dosiereinrichtungen und Temperaturregelung ausgerüstetem Polymerisationsgefäß wurden bei 20 bis 25 °C (Raumtemperatur) unter Stickstoffatmosphäre 290,9 g entionisiertes Wasser und 12,0 g einer 15 gew.-%igen wässrigen Lösung von Natriumlaurylsulfat vorgelegt und unter Rühren auf 80 °C aufgeheizt. Bei Erreichung dieser Temperatur wurde 25,7 g einer 7 gew.-%igen wässrigen Lösung von Natriumperoxodisulfat zugegeben und während zwei Minuten gerührt. Anschließend wurde unter Aufrechterhaltung der Temperatur Zulauf Z1 innerhalb von 40 Minuten bei gleichbleibendem Mengenstrom kontinuierlich zudosiert. Nach dem Ende der Zugabe von Zulauf Z1 wurden dem Polymerisationsgemisch 12,0 g entionisiertes Wasser zugegeben. Anschließend ließ man das Polymerisationsgemisch noch 10 Minuten bei 80 °C nachreagieren. Danach wurden dem Polymerisationsgemisch 1,9 g einer 3 gew.-%igen wässrigen Ammoniaklösung innerhalb von 10 Minuten bei gleichbleibendem Mengenstrom kontinuierlich zudosiert. Daran anschließend wurde innerhalb von 90 Minuten bei gleichbleibendem Mengenstrom Zulauf Z2 kontinuierlich zudosiert. 40 Minuten nach Start des Zulaufs 2 wurde parallel zum laufenden Zulauf 2 dem Polymerisationsgemisch 0,9 g einer 3 gew.-%igen wässrigen Ammoniaklösung innerhalb von 10 Minuten bei gleichbleibendem Mengenstrom kontinuierlich zudosiert. Nach Beendigung des Zulaufs Z2 wurden dem Polymerisationsgemisch 12 g Wasser zugegeben. Danach ließ man das Polymerisationsgemisch noch 90 Minuten bei 80 °C nachreagieren. Danach wurden dem Polymerisationsgemisch 1,7 g einer 5 gew.-%igen wässrigen Ammoniaklösung innerhalb von 10 Minuten bei gleichbleibendem Mengenstrom kontinuierlich zudosiert. Anschließend wurde die erhaltene wässrige Polymerisatdispersion auf Raumtemperatur abgekühlt, und durch ein 125 µm Filter filtriert.

Z1 (homogene Mischung aus):

| | |
|---|---|
| 75,0 g | entionisiertes Wasser |
| 3,0 g | einer 15 gew.-%igen wässrigen Lösung von Natriumlaurylsulfat |
| 6,8 g | Glycidylmethacrylat |
| 38,25 g | n-Butylacrylat |
| 90,0 g | Methylmethacrylat |

Z2 (homogene Mischung aus):

| | |
|---|---|
| 186,1 g | entionisiertes Wasser |
| 6,0 g | einer 15 gew.-%igen wässrigen Lösung von Natriumlaurylsulfat |
| 221,4 g | n-Butylacrylat |
| 93,6 g | Methylmethacrylat |

Die erhaltene wässrige Polymerisatdispersion wies einen Feststoffgehalt von 42,4 Gew.-% auf. Der gewichtsmittlere Teilchendurchmesser der Polymerisatdispersion betrug 79 nm. Die Wasseraufnahme eines Dispersionsfilms, der durch Ausgießen der Dispersion in eine Kautschukplatte und Trocknen bei Raumtemperatur über 7 Tage erhalten werden konnte lag bei 5,3 % nach 24 h und bei 7,3 % nach 48 h. Der Auswaschverlust dieses Films lag bei 0,05 %. Der Auswaschverlust dieses Films in Toluol lag bei 97,0 % nach 24 h.

### Beispiel 8 (Dispersion D8)

740 g der nach Beispiel 7 erhaltenen wässrigen Polymerisatdispersion D7 wurden mit 12,37 g einer 5 gew.-%igen wässrigen Di-Natriumtetraborat-Decahydrat-Lösung bei Raumtemperatur gemischt.

Die Wasseraufnahme eines Dispersionsfilms, der durch Ausgießen der Dispersion in eine Kautschukplatte und Trocknen bei Raumtemperatur über 7 Tage erhalten werden konnte lag bei 5,6 % nach 24 h und bei 7,6 % nach 48 h. Der Auswaschverlust dieses Films lag bei 0,10 %. Der Auswaschverlust dieses Films in Toluol lag bei 89,2 % nach 24h.

### Herstellungsbeispiel 9 (Dispersion D9)

Die Herstellung der Polymerdispersion erfolgte analog zur Vorschrift aus Beispiel 7 mit dem Unterschied, dass zusätzlich 0,9 g Di-Natriumtetraborat vorgelegt wurden und in Zulauf 2 187,3g entionisiertes Wasser eingesetzt wurden.

Die erhaltene wässrige Polymerisatdispersion wies einen Feststoffgehalt von 42,6 Gew.-% auf. Der gewichtsmittlere Teilchendurchmesser der Polymerisatdispersion betrug 77 nm. Die Wasseraufnahme eines Dispersionsfilms, der durch Ausgießen der Dispersion in eine Kautschukplatte und Trocknen bei Raumtemperatur über 7 Tage erhalten werden konnte lag bei 7,2 % nach 24 h und bei 9,7 % nach 48 h. Der Auswaschverlust dieses Films lag bei 0,12 %. Der Auswaschverlust dieses Films in Toluol lag bei nur 8,0 % nach 24 h.

### Vergleichsbeispiel 1 (Dispersion VD1)

Die Herstellung erfolgte wie für Beispiel 1 beschrieben. Es wurden aber 12,0 g Methacrylsäure, 336 g Methylmethacrylat, 202 g n-Butylacrylat verwendet und anstelle der Mischung aus 1-Methacrylamido-2-D-gluconylaminoethan und Methacrylsäure wurden 49,8 g Butandiolmonoacrylat verwendet.

Man erhielt eine Polymerdispersion mit einem Feststoffgehalt von 51,1 Gew.-%, einem pH-Wert von 8,3 und einer mittleren Teilchengröße von 122 nm (bestimmte mittels HPPS). Der Gelanteil in THF lag bei 80 % und die THF-Aufnahme betrug 1500 %. Die Pendelhärte war 41 s. Der über DMTA-Anaylse ermittelte Speichermodul betrug 20,1 x 10⁵ Pa (60 C), 4,91 x 10⁵ Pa (100 °C), 1,87 x 105 Pa (150 °C), die aus dem Maximum des Verlustmoduls bestimmte Glasübergangstemperatur T_{g} lag bei 26 °C.

### Vergleichsbeispiel 2 (Dispersion VD2)

Zu 200 g der Polymerdispersion aus Vergleichsbeispiel 1 wurden 10,8 g einer wässrigen Lösung von Di-Natriumtetraborat-Decahydrat (Feststoffgehalt 5 Gew.-%) gegeben und gut durchmischt.

Der Gelanteil in THF lag bei 82 % und die THF-Aufnahme beträgt 2200 %. Die Pendelhärte war 41 s. Das über DMTA-Analyse ermittelte Speichermodul betrug 29,5 x 10⁵ Pa (60 °C), 5,95 x 10⁵ Pa (100 °C), 3,03 x 10⁵ Pa (150 °C), die aus dem Maximum des Verlustmoduls bestimmte T_{g} lag bei 30 °C.

### Vergleichsbeispiel 3 (Dispersion VD3)

Die Herstellung erfolgte wie für Beispiel 5 beschrieben. Im Zulauf Z3 wurden anstelle der 25 g Glycosidacrylat 25 g 2-Hydroxyethylmethacrylat verwendet.

Man erhielt eine Polymerdispersion mit einem Feststoffgehalt von 44,3 Gew.-%, einem pH-Wert von 6,4 und einer mittleren Teilchengröße von 105 nm (dynamische Lichtstreuung). Der Gelanteil in Toluol lag bei 6 %. Das über DMTA-Anaylse ermittelte Speichermodul betrug 7 x 10⁵ Pa (60 °C), 2 x 10⁵ Pa (100 °C), < 1 x 10⁴ Pa (150 °C)*, die aus dem Maximum des Verlustmoduls bestimmte Glasübergangstemperatur T_{g} lag bei 17°C. Die Viskosität nach Brookfield betrug 100 mPa·s. *Wert unterhalb Messgrenze von 10⁴ Pa.

### Vergleichsbeispiel 4 (Dispersion VD4)

100 g der Polymerdispersion aus Vergleichsbeispiel 3 wurden mit 0,8 g einer 10 gew.-%igen Natriumoctaboratlösung versetzt (entsprechend einem Molverhältnis von OH zu Bor von 10:1)

Man erhielt eine Polymerdispersion mit einem Feststoffgehalt von 44,2 Gew.-%, einem pH-Wert von 8,4 und einer mittleren Teilchengröße von 103 nm (dynamische Lichtstreuung). Der Gelanteil in Toluol lag bei 7 %. Das über DMTA-Anaylse ermittelte Speichermodul betrug 7 x 10⁵ Pa (60 °C), 3 x 10⁵ Pa (100 °C), 2 x 10⁴ Pa (150 °C), die aus dem Maximum des Verlustmoduls bestimmte Glasübergangstemperatur T_{g} lag bei 17 °C.

### Vergleichsbeispiel 5 (Dispersion VD5)

Die Herstellung erfolgte analog der Herstellung von Beispiel 7 mit dem Unterschied, dass in Zulauf 1 statt 6,8 g Glycidylmethacrylat 12,6 g Hydroxyethylmethacrylat eingesetzt wurde.

Die erhaltene wässrige Polymerisatdispersion wies einen Feststoffgehalt von 42,3 Gew.-% auf. Der gewichtsmittlere Teilchendurchmesser der Polymerisatdispersion betrug 83 nm. Die Wasseraufnahme eines Dispersionsfilms, der durch Ausgießen der Dispersion in eine Kautschukplatte und Trocknen bei Raumtemperatur über 7 Tage erhalten werden konnte lag bei 5,6 % nach 24 h und bei 7,5 % nach 48 h. Der Auswaschverlust dieses Films lag bei 0,09 %. Der Auswaschverlust dieses Films in Toluol lag bei 97,6 % nach 24 h.

### Vergleichsbeispiel 6 (Dispersion VD6)

Von der nach Vergleichsbeispiel 5 erhaltenen wässrigen Polymerisatdispersion wurden 740 g mit 12,37 g einer 5%igen wässrigen Di-Natriumtetraborat-Decahydrat-Lösung bei Raumtemperatur gemischt.

Die Wasseraufnahme eines Dispersionsfilms, der durch Ausgießen der Dispersion in eine Kautschukplatte und Trocknen bei Raumtemperatur über 7 Tage erhalten werden konnte lag bei 6,0 % nach 24 h und bei 8,0 % nach 48 h. Der Auswaschverlust dieses Films lag bei 0,13 %. Der Auswaschverlust dieses Films in Toluol lag bei 95,1 % nach 24 h.

## Patentansprüche

1. Wässrige Bindemittelzusammensetzung, enthaltend
a) ein wasserunlösliches Polymer P in Form dispergierter Polymerpartikel, das erhältlich ist durch Polymerisation ethylenisch ungesättigter Monomere M, wobei die Monomere M umfassen:
• 90 bis 99,9 Gew.-%, bezogen auf die Gesamtmenge an Monomeren M, wenigstens eines gering wasserlöslichen neutralen monoethylenisch ungesättigten Monomers M1; und
• 0,1 bis 10 Gew.-%, bezogen auf die Gesamtmenge an Monomeren M, wenigstens eines monoethylenisch ungesättigten Monomers M2, das ausgewählt ist unter monoethylenisch ungesättigten Monomeren, die wenigstens zwei an vicinale C-Atome gebundene Hydroxylgruppen aufweisen, und monoethylenisch ungesättigten Monomeren, die eine funktionale Gruppen tragen, welche durch Hydrolyse in zwei an vicinale C-Atome gebundene Hydroxylgruppen überführt werden können;
und
b) Borsäure und/oder wenigstens ein Salz der Borsäure;
wobei das wenigstens eine Monomer M1 ausgewählt ist unter Estern und Diestern monoethylenisch ungesättigter C₃-C₈-Mono- und C₄-C₈-Dicarbonsäuren mit C₁-C₃₀-Alkanolen, Estern von Vinyl- oder Allylalkohol mit C₁-C₃₀-Monocarbonsäuren, Vinylaromaten, Amiden und Diamiden, monoethylenisch ungesättigter C₃-C₈-Mono- und C₄-C₈-Dicarbonsäuren mit C₁-C₃₀-Alkylaminen oder Di-C₁-C₃₀-alkylaminen und Mischungen davon.

2. Wässrige Bindemittelzusammensetzung nach Anspruch 1, wobei die Monomeren M2 ausgewählt sind unter monoethylenisch ungesättigten Monomeren, die wenigstens zwei an vicinale C-Atome gebundene Hydroxylgruppen aufweisen.

3. Wässrige Bindemittelzusammensetzung nach Anspruch 2, wobei die Monomere M2 ausgewählt sind unter Monomeren der allgemeinen Formel I 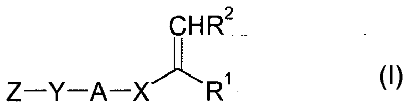 worin
R¹ für Wasserstoff oder Methyl steht;
R² für Wasserstoff oder COOH steht;
X für O, NR³, CH₂O, CH₂NR³, C(=O)O oder C(O)NR⁴ steht, wobei das Kohlenstoffatom in den 4 zuletzt genannten Resten an das Kohlenstoffatom gebunden ist, welches R¹ trägt, worin R³ für Wasserstoff, C₁-C₄-Alkyl oder eine Gruppe Z-Y-A steht und R⁴ Wasserstoff, C₁-C₄-Alkyl bedeutet;
A für C₂-C₂₀-Alkylen oder eine Gruppe -R⁵-O-[-R⁵-O-]ₓ-C₂-C₂₀-Alkylen steht, worin R⁵ für CH₂CH₂ oder C₃H₆ steht und x für eine ganze Zahl von 0 bis 20 steht;
Y für eine chemische Bindung, O oder NR⁶ steht, worin R⁶ Wasserstoff oder C₁-C₄-Alkyl bedeutet; oder
A-Y eine chemische Bindung oder CH₂ bedeutet; und
Z für einen Rest der Formeln Z¹ oder Z² steht; 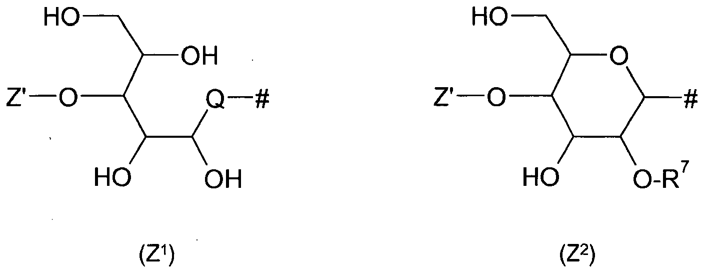
worin
Q für C(O) oder CH₂ steht
Z' für Wasserstoff oder einen Mono- oder Oligosaccharid-Rest steht und
R⁷ Wasserstoff oder Methyl bedeutet;

4. Wässrige Bindemittelzusammensetzung nach einem der vorhergehenden Ansprüche, wobei die Monomeren M wenigstens ein monoethylenisch ungesättigtes Monomer M3 mit wenigstens einer Carboxylat- oder Carbonsäureamidgruppe umfassen, wobei das Monomer M3 ausgewählt ist unter monoethylenisch ungesättigten C₃-C₈-Monocarbonsäuren und den primären Amiden monoethylenisch ungesättigten C₃-C₈-Monocarbonsäuren..

5. Wässrige Bindemittelzusammensetzung nach einem der vorhergehenden Ansprüche, wobei die Monomere M zusätzlich wenigstens ein Monomer M4 umfassen, das ausgewählt ist unter Hydroxy-C₂-C₄-alkylestern monoethylenisch ungesättigter C₃-C₈-Monocarbonsäuren, Monoestern monoethylenisch ungesättigter C₃-C₈-Carbonsäuren mit Polyoxy-C₂-C₄-alkylenethern und monoethylenisch ungesättigte Monomeren mit wenigstens einer Hamstoffgruppe.

6. Wässrige Bindemittelzusammensetzung nach einem der vorhergehenden Ansprüche, wobei das wasserunlösliche Polymer der Komponente a) durch radikalische, wässrige Emulsionspolymerisation erhältlich ist.

7. Wässrige Bindemittelzusammensetzung nach einem der vorhergehenden Ansprüche, wobei der mittlere Teilchendurchmesser der Polymerpartikel, bestimmt durch Lichtstreuung nach ISO 13321, im Bereich von 0,03 bis 1,5 µm liegt.

8. Wässrige Bindemittelzusammensetzung nach einem der vorhergehenden Ansprüche, wobei die Komponente b) ausgewählt ist unter Borsäure und Alkali-, Erdalkali-, Ammonium-, Alkylammonium- und Hydroxyalkylammoniumsalzen der ortho-Borsäure oder Oligoborsäure mit bis zu 20 Boratomen.

9. Wässrige Bindemittelzusammensetzung nach einem der vorhergehenden Ansprüche, enthaltend die Komponente b) in einer Menge von 0,1 bis 10 Gew.-%, bezogen auf das wasserunlösliche Polymer.

10. Feste Bindemittelzusammensetzung enthaltend ein wasserunlösliches Polymer, das gemäß einem der Ansprüche 1 bis 8 definiert ist, in Form eines Pulvers und Borsäure und/oder wenigstens ein Salz der Borsäure.

11. Feste, pulverförmige Bindemittelzusammensetzung, erhältlich durch Trocknung einer der wässrigen Bindemittelzusammensetzungen nach einem der Ansprüche 1 bis 8.

12. Verfahren zur Herstellung einer wässrigen Bindemittelzusammensetzung nach einem der Ansprüche 1 bis 8, umfassend die Schritte
A) Herstellung einer wässrigen Dispersionen eines wasserunlöslichen Polymers durch Polymerisation ethylenisch ungesättigter Monomere M; und
B) Zugabe von Borsäure und/oder wenigstens eines Salzes der Borsäure zu der in Schritt A) erhaltenen Polymerdispersion oder während deren Herstellung.

13. Wässrige Polymerdispersion eines in Wasser unlöslichen Polymers P, das erhältlich ist durch Polymerisation ethylenisch ungesättigter Monomere M, wobei die Monomere M umfassen:
• 90 bis 99,9 Gew.-%, bezogen auf die Gesamtmenge an Monomeren M, wenigstens eines gering wasserlöslichen neutralen monoethylenisch ungesättigten Monomers M1, das ausgewählt ist unter Estern und Diestern monoethylenisch ungesättigter C₃-C₈-Mono- und C₄-C₈-Dicarbonsäuren mit C₁-C₃₀-Alkanolen, Estern von Vinyl- oder Allylalkohol mit C₁-C₃₀-Monocarbonsäuren, Vinylaromaten, Amiden und Diamiden monoethylenisch ungesättigter C₃-C₈-Mono- und C₄-C₈-Dicarbonsäuren mit C₁-C₃₀-Alkylaminen oder Di-C₁-C₃₀-alkylaminen und Mischungen davon; und
• 0,1 bis 10 Gew.-%, bezogen auf die Gesamtmenge an Monomeren M, wenigstens eines monoethylenisch ungesättigten Monomers M2, das ausgewählt ist unter monoethylenisch ungesättigten Monomeren, die wenigstens zwei an vicinale C-Atome gebundene Hydroxylgruppen aufweisen.

14. Wässrige Polymerdispersion nach einem der Ansprüche 13, wobei die Monomeren M2 ausgewählt sind unter Monomeren der allgemeinen Formel I
worin 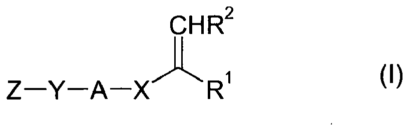
R¹ für Wasserstoff oder Methyl steht;
R² für Wasserstoff oder COOH steht;
X für O, NR³, CH₂O, CH₂NR³, C(=O)O oder C(O)NR⁴ steht, wobei das Kohlenstoffatom in den 4 zuletzt genannten Resten an das Kohlenstoffatom gebunden ist, welches R¹ trägt, worin R³ für Wasserstoff, C₁-C₄-Alkyl oder eine Gruppe Z-Y-A steht und R⁴ Wasserstoff, C₁-C₄-Alkyl bedeutet;
A für C₂-C₂₀-Alkylen oder eine Gruppe -R⁵-O-[-R⁵-O-]ₓ-C₂-C₂₀-Alkylen steht, worin R⁵ für CH₂CH₂ oder C₃H₆ steht und x für eine ganze Zahl von 0 bis 20 steht;
Y für eine chemische Bindung, O oder NR⁶ steht, worin R⁶ Wasserstoff oder C₁-C₄-Alkyl bedeutet; oder
A-Y eine chemische Bindung oder CH₂ bedeutet; und
Z für eine Rest der Formeln Z¹ oder Z² steht; 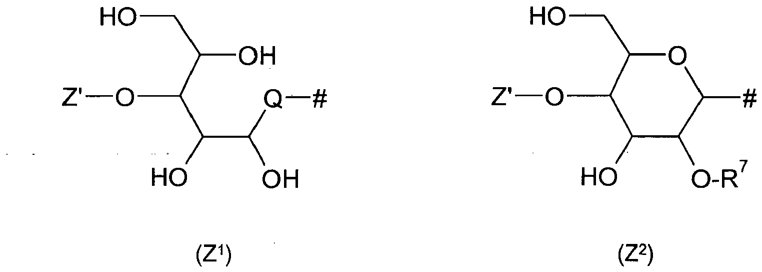
worin
Q für C(O) oder CH₂ steht
Z' für Wasserstoff oder einen Mono- oder Oligosaccharid-Rest steht und
R⁷ Wasserstoff oder Methyl bedeutet;

15. Wässrige Polymerdispersion nach einem der Ansprüche 13 oder 14, wobei die Monomeren M wenigstens ein monoethylenisch ungesättigtes Monomer M3 mit wenigstens einer Carboxylat- oder Carbonsäureamidgruppe umfassen, wobei das Monomer M3 ausgewählt ist unter monoethylenisch ungesättigten C₃-C₈-Monocarbonsäuren und den primären Amiden monoethylenisch ungesättigten C₃-C₈-Monocarbonsäuren.

16. Wässrige Polymerdispersion nach einem der Ansprüche 13 bis 15, wobei die Monomere M zusätzlich wenigstens ein Monomer M4 umfassen, das ausgewählt ist unter Hydroxy-C₂-C₄-alkylestern monoethylenisch ungesättigter C₃-C₈-Monocarbonsäuren, Monoester monoethylenisch ungesättigter C₃-C₈-Carbonsäuren mit Polyoxy-C₂-C₄-alkylenethern und monoethylenisch ungesättigte Monomeren mit wenigstens einer Harnstoffgruppe.

17. Wässrige Polymerdispersion nach einem der Ansprüche 13 bis 16, wobei die mittlere Teilchendurchmesser der Polymerpartikel, bestimmt durch Lichtstreuung nach ISO 13321, im Bereich von 0,03 bis 1,5 µm liegt.

18. Verwendung einer Bindemittelzusammensetzung nach einem der Ansprüche 1 bis 11 in Beschichtungsmitteln, Klebstoffen, Dichtmassen, in Druckfarben, zur Herstellung von polymerverfestigten Vliesen oder zur Modifizierung von anorganischen, hydraulisch abbindenden Bindemitteln.

## Claims

1. An aqueous binder composition comprising
a) a water-insoluble polymer P in the form of dispersed polymer particles which is obtainable by polymerization of ethylenically unsaturated monomers M, the monomers M comprising:
• 90% to 99.9% by weight, based on the total amount of monomers M, of at least one neutral, monoethylenically unsaturated monomer M1 of low water-solubility; and
• 0.1% to 10% by weight, based on the total amount of monomers M, of at least one monoethylenically unsaturated monomer M2 which is selected from monoethylenically unsaturated monomers which have at least two hydroxyl groups attached to vicinal C atoms, and monoethylenically unsaturated monomers which carry a functional groups which can be converted by hydrolysis into two hydroxyl groups attached to vicinal C atoms;
and
b) boric acid and/or at least one salt of boric
acid;
the at least one monomer M1 is selected from esters and diesters of monoethylenically unsaturated C₃-C₈ monocarboxylic and C₄-C₈ dicarboxylic acids with C₁-C₃₀ alkanols, esters of vinyl alcohol or allyl alcohol with C₁-C₃₀ monocarboxylic acids, vinylaromatics, amides and diamides, monoethylenically unsaturated C₃-C₈ monocarboxylic and C₄-C₈ dicarboxylic acids with C₁-C₃₀ alkylamines or di-C₁-C₃₀ alkylamines, and mixtures thereof.

2. The aqueous binder composition according to claim 1, the monomers M2 being selected from monoethylenically unsaturated monomers which have at least two hydroxyl groups attached to vicinal C atoms.

3. The aqueous binder composition according to claim 2, the monomers M2 being selected from monomers of the general formula I
in which 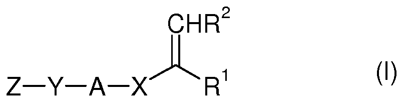
R¹ is hydrogen or methyl;
R² is hydrogen or COOH;
X is 0, NR³, CH₂O, CH₂NR³, C(=O)O or C(O)NR⁴, the carbon atom in the 4 last-mentioned radicals being attached to the carbon atom which carries R¹, where R³ is hydrogen, C₁-C₄ alkyl or a group Z-Y-A, and R⁴ is hydrogen or C₁-C₄ alkyl;
A is C₂-C₂₀ alkylene or a group -R⁵-O- [-R⁵-O-]ₓ-C₂-C₂₀ alkylene, where R⁵ is CH₂CH₂ or C₃H₆ and x is an integer from 0 to 20;
Y is a chemical bond, O or NR⁶, where R⁶ is hydrogen or C₁-C₄ alkyl; or
A-Y is a chemical bond or CH₂; and
Z is a radical of the formulae Z¹ or Z²; 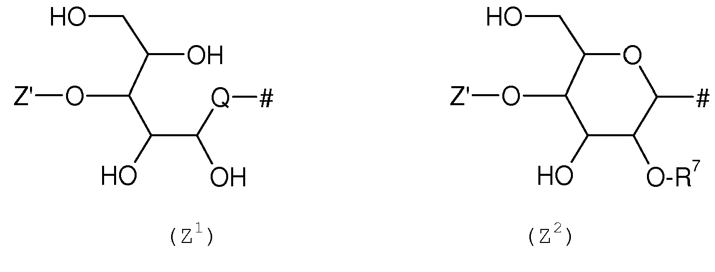 where
Q is C(O) or CH₂,
Z' is hydrogen or a monosaccharide or oligosaccharide radical, and
R⁷ is hydrogen or methyl;

4. The aqueous binder composition according to any of the preceding claims, the monomers M comprising at least one monoethylenically unsaturated monomer M3 having at least one carboxylate or carboxamido group, the monomer M3 being selected from monoethylenically unsaturated C₃-C₈ monocarboxylic acids and the primary amides of monoethylenically unsaturated C₃-C₈ monocarboxylic acids.

5. The aqueous binder composition according to any of the preceding claims, the monomers M further comprising at least one monomer M4 which is selected from hydroxy-C₂-C₄ alkyl esters of monoethylenically unsaturated C₃-C₈ monocarboxylic acids, monoesters of monoethylenically unsaturated C₃-C₈ carboxylic acids with polyoxy-C₂-C₄ alkylene ethers, and monoethylenically unsaturated monomers having at least one urea group.

6. The aqueous binder composition according to any of the preceding claims, the water-insoluble polymer of component a) being obtainable by free-radical, aqueous emulsion polymerization.

7. The aqueous binder composition according to any of the preceding claims, the average particle diameter of the polymer particles, determined by light scattering according to ISO 13321, being situated in the range from 0.03 to 1.5 µm.

8. The aqueous binder composition according to any of the preceding claims, component b) being selected from boric acid and alkali metal salts, alkaline earth metal salts, ammonium salts, alkylammonium salts, and hydroxyalkylammonium salts of orthoboric acid or oligoboric acid having up to 20 boron atoms.

9. The aqueous binder composition according to any of the preceding claims, comprising component b) in an amount of 0.1% to 10% by weight, based on the water-insoluble polymer.

10. A solid binder composition comprising a water-insoluble polymer defined according to any of claims 1 to 8 in the form of a powder, and boric acid and/or at least one salt of boric acid.

11. A solid binder composition in powder form, obtainable by drying one of the aqueous binder compositions according to any of claims 1 to 8.

12. A process for preparing an aqueous binder composition according to any of claims 1 to 8, comprising the steps of
A) preparing an aqueous dispersions of a water-insoluble polymer by polymerization of ethylenically unsaturated monomers M; and
B) adding boric acid and/or at least one salt of boric acid to the polymer dispersion obtained in step A), or during its preparation.

13. An aqueous polymer dispersion of a water-insoluble polymer P which is obtainable by polymerization of ethylenically unsaturated monomers M, the monomers M comprising:
• 90% to 99.9% by weight, based on the total amount of monomers M, of at least one neutral, monoethylenically unsaturated monomer M1 of low water-solubility which is selected from esters and diesters of monoethylenically unsaturated C₃-C₈ monocarboxylic and C₄-C₈ dicarboxylic acids with C₁-C₃₀ alkanols, esters of vinyl alcohol or allyl alcohol with C₁-C₃₀ monocarboxylic acids, vinylaromatics, amides and diamides of monoethylenically unsaturated C₃-C₈ monocarboxylic and C₄-C₈ dicarboxylic acids with C₁-C₃₀ alkylamines or di-C₁-C₃₀ alkylamines, and mixtures thereof; and
• 0.1% to 10% by weight, based on the total amount of monomers M, of at least one monoethylenically unsaturated monomer M2 which is selected from monoethylenically unsaturated monomers which have at least two hydroxyl groups attached to vicinal C atoms.

14. The aqueous polymer dispersion according to any of claims 13, the monomers M2 being selected from monomers of the general formula I
in which 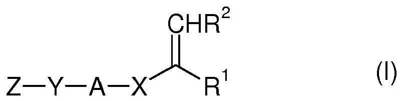
R¹ is hydrogen or methyl;
R² is hydrogen or COOH;
X is O, NR³, CH₂O, CH₂NR³, C(=O)O or C(O)NR⁴, the carbon atom in the 4 last-mentioned radicals being attached to the carbon atom which carries R¹, where R³ is hydrogen, C₁-C₄ alkyl or a group Z-Y-A, and R⁴ is hydrogen or C₁-C₄ alkyl;
A is C₂-C₂₀ alkylene or a group -R⁵-O- [-R⁵-O-]ₓ-C₂-C₂₀ alkylene, where R⁵ is CH₂CH₂ or C₃H₆ and x is an integer from 0 to 20;
Y is a chemical bond, O or NR⁶, where R⁶ is hydrogen or C₁-C₄ alkyl; or
A-Y is a chemical bond or CH₂; and
Z is a radical of the formulae Z¹ or Z²; 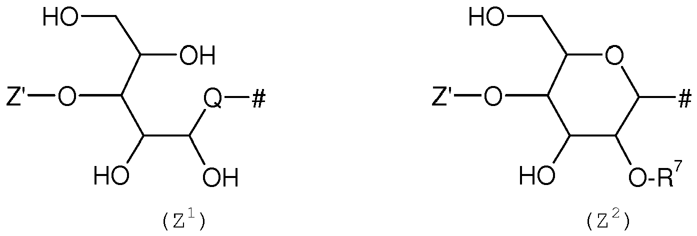 where
Q is C(O) or CH₂,
Z' is hydrogen or a monosaccharide or oligosaccharide radical, and
R⁷ is hydrogen or methyl;

15. The aqueous polymer dispersion according to either of claims 13 and 14, the monomers M comprising at least one monoethylenically unsaturated monomer M3 having at least one carboxylate or carboxamido group, the monomer M3 being selected from monoethylenically unsaturated C₃-C₈ monocarboxylic acids and the primary amides of monoethylenically unsaturated C₃-C₈ monocarboxylic acids.

16. The aqueous polymer dispersion according to any of claims 13 to 15, the monomers M further comprising at least one monomer M4 which is selected from hydroxy-C₂-C₄ alkyl esters of monoethylenically unsaturated C₃-C₈ monocarboxylic acids, monoesters of monoethylenically unsaturated C₃-C₈ carboxylic acids with polyoxy-C₂-C₄ alkylene ethers, and monoethylenically unsaturated monomers having at least one urea group.

17. The aqueous polymer dispersion according to any of claims 13 to 16, the average particle diameter of the polymer particles, determined by light scattering according to ISO 13321, being situated in the range from 0.03 to 1.5 µm.

18. The use of a binder composition according to any of claims 1 to 11 in a coating material, adhesive, sealant, in a printing ink, for producing a polymer-consolidated nonwoven or for modifying an inorganic, hydraulically setting binder.

## Revendications

1. Composition aqueuse de liant, contenant
a) un polymère P insoluble dans l'eau, sous forme de particules de polymère dispersées, qui peut être obtenu par polymérisation de monomères M à insaturation éthylénique, les monomères M comprenant :
• 90 à 99,9 % en poids, par rapport à la quantité totale des monomères M, d'au moins un monomère M1 neutre à insaturation monoéthylénique, peu soluble dans l'eau ; et
• 0,1 à 10 % en poids, par rapport à la quantité totale des monomères M, d'au moins un monomère M2 à insaturation monoéthylénique qui est choisi parmi des monomères à insaturation monoéthylénique qui comportent au moins deux groupes hydroxy liés à des atomes de carbone vicinaux, et des monomères à insaturation monoéthylénique qui portent un groupes fonctionnels qui peuvent être convertis par hydrolyse en deux groupes hydroxy liés à des atomes de carbone vicinaux ;
et
b) de l'acide borique et/ou au moins un sel de l'acide borique ;
ledit au moins un monomère M1 étant choisi parmi des esters et diesters d'acides monocarboxyliques en C₃-C₈ et dicarboxyliques en C₄-C₈ à insaturation monoéthylénique avec des alcanols en C₁-C₃₀, des esters d'alcool vinylique ou allylique avec des acides monocarboxyliques en C₁-C₃₀, des composés vinylaromatiques, des amides et diamides, d'acides monocarboxyliques en C₃-C₈ et dicarboxyliques en C₄-C₈ à insaturation monoéthylénique avec des alkyl (C₁-C₃₀) amines ou dialkyl (C₁-C₃₀) amines et des mélanges de ceux-ci.

2. Composition aqueuse de liant selon la revendication 1, dans laquelle les monomères M2 sont choisis parmi des monomères à insaturation monoéthylénique qui comportent au moins deux groupes hydroxy liés à des atomes de carbone vicinaux.

3. Composition aqueuse de liant selon la revendication 2, dans laquelle les monomères M2 sont choisis parmi des monomères de formule générale I 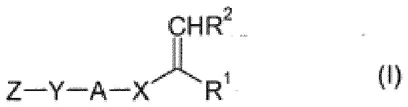 dans laquelle
R¹ représente un atome d'hydrogène ou le groupe méthyle ;
R² représente un atome d'hydrogène ou COOH ;
X représente O, NR³, CH₂O, CH₂NR³, C(=O)O ou C(O)NR⁴, l'atome de carbone dans les 4 radicaux nommés en dernier étant lié à l'atome de carbone qui porte R¹, où R³ représente un atome d'hydrogène, un groupe alkyle en C₁-C₄ ou un groupe Z-Y-A et R⁴ représente un atome d'hydrogène, un groupe alkyle en C₁-C₄ ;
A représente un groupe alkylène en C₂-C₂₀ ou un groupe -R⁵-O-[-R⁵-O-]ₓ-alkylène(C₂-C₂₀), où R⁵ représente CH₂CH₂ ou C₃H₆ et x représente un nombre entier valant de 0 à 20 ;
Y représente une liaison chimique, O ou NR⁶, où R⁶ représente un atome d'hydrogène ou un groupe alkyle en C₁-C₄ ; ou
A-Y représente une liaison chimique ou CH₂ ; et
Z représente un radical de formules Z¹ ou Z² ; 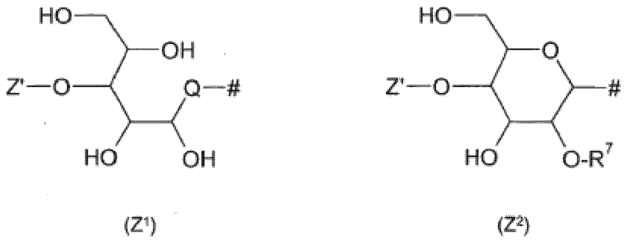 dans lesquelles
Q représente C(O) ou CH₂
Z' représente un atome d'hydrogène ou un radical de monosaccharide ou d'oligosaccharide et
R⁷ représente un atome d'hydrogène ou le groupe méthyle ;

4. Composition aqueuse de liant selon l'une quelconque des revendications précédentes, dans laquelle les monomères M comprennent au moins un monomère M3 à insaturation monoéthylénique, comportant au moins un groupe carboxylate ou carboxamido, le monomère M3 étant choisi parmi des acides monocarboxyliques en C₃-C₈ à insaturation monoéthylénique et les amides primaires d'acides monocarboxyliques en C₃-C₈ à insaturation monoéthylénique.

5. Composition aqueuse de liant selon l'une quelconque des revendications précédentes, dans laquelle les monomères M comprennent en outre au moins un monomère M4 qui est choisi parmi des esters hydroxyalkyliques en C₂-C₄ d'acides monocarboxyliques en C₃-C₈ à insaturation monoéthylénique, des monoesters d'acides carboxyliques en C₃-C₈ à insaturation monoéthylénique avec des éthers polyoxyalkyléniques en C₂-C₄ et des monomères à insaturation monoéthylénique comportant au moins un groupe urée.

6. Composition aqueuse de liant selon l'une quelconque des revendications précédentes, dans laquelle le polymère insoluble dans l'eau du composant a) peut être obtenu par polymérisation radicalaire en émulsion aqueuse.

7. Composition aqueuse de liant selon l'une quelconque des revendications précédentes, dans laquelle le diamètre moyen de particule des particules de polymère, déterminé par diffusion de la lumière selon ISO 13321, se situe dans la plage de 0,03 à 1,5 µm.

8. Composition aqueuse de liant selon l'une quelconque des revendications précédentes, dans laquelle le composant b) est choisi parmi l'acide borique et des sels de métaux alcalins, de métaux alcalino-terreux, d'ammonium, d'alkylammonium et d'hydroxyalkylammonium de l'acide orthoborique ou d'un acide oligoborique ayant jusqu'à 20 atomes de bore.

9. Composition aqueuse de liant selon l'une quelconque des revendications précédentes, contenant le composant b) en une quantité de 0,1 à 10 % en poids, par rapport au polymère insoluble dans l'eau.

10. Composition solide de liant, contenant un polymère insoluble dans l'eau qui est défini selon l'une quelconque des revendications 1 à 8, sous forme d'une poudre, et de l'acide borique et/ou au moins un sel de l'acide borique.

11. Composition de liant solide, pulvérulente, pouvant être obtenue par séchage d'une des compositions aqueuses de liant selon l'une quelconque des revendications 1 à 8.

12. Procédé pour la préparation d'une composition aqueuse de liant selon l'une quelconque des revendications 1 à 8, comprenant les étapes
A) préparation d'une dispersions aqueuses d'un polymère insoluble dans l'eau par polymérisation de monomères M à insaturation éthylénique ; et
B) addition d'acide borique et/ou d'au moins un sel de l'acide borique à la dispersion de polymère obtenue dans l'étape A) ou pendant la préparation de celle-ci.

13. Dispersion aqueuse de polymère d'un polymère P insoluble dans l'eau, qui peut être obtenu par polymérisation de monomères M à insaturation éthylénique, les monomères M comprenant :
• 90 à 99,9 % en poids, par rapport à la quantité totale des monomères M, d'au moins un monomère M1 neutre à insaturation monoéthylénique, peu soluble dans l'eau, qui est choisi parmi des esters et diesters d'acides monocarboxyliques en C₃-C₈ et dicarboxyliques en C₄-C₈ à insaturation monoéthylénique avec des alcanols en C₁-C₃₀, des esters d'alcool vinylique ou allylique avec des acides monocarboxyliques en C₁-C₃₀, des composés vinylaromatiques, des amides et diamides d'acides monocarboxyliques en C₃-C₈ et dicarboxyliques en C₄-C₈ à insaturation monoéthylénique avec des alkyl (C₁-C₃₀) amines ou dialkyl (C₁-C₃₀) amines et des mélanges de ceux-ci ; et
• 0,1 à 10 % en poids, par rapport à la quantité totale des monomères M, d'au moins un monomère M2 à insaturation monoéthylénique, qui est choisi parmi des monomères à insaturation monoéthylénique qui comportent au moins deux groupes hydroxy liés à des atomes de carbone vicinaux.

14. Dispersion aqueuse de polymère selon l'une quelconque des revendications 13, dans laquelle les monomères M2 sont choisis parmi des monomères de formule générale I 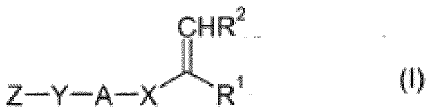 dans laquelle
R¹ représente un atome d'hydrogène ou le groupe méthyle ;
R² représente un atome d'hydrogène ou COOH ;
X représente O, NR³, CH₂O, CH₂NR³, C(=O)O ou C(O)NR⁴, l'atome de carbone dans les 4 radicaux nommés en dernier étant lié à l'atome de carbone qui porte R¹, où R³ représente un atome d'hydrogène, un groupe alkyle en C₁-C₄ ou un groupe Z-Y-A et R⁴ représente un atome d'hydrogène, un groupe alkyle en C₁-C₄ ;
A représente un groupe alkylène en C₂-C₂₀ ou un groupe -R⁵-O-[-R⁵-O-]ₓ-alkylène (C₂-C₂₀), où R⁵ représente CH₂CH₂ ou C₃H₆ et x représente un nombre entier valant de 0 à 20 ;
Y représente une liaison chimique, O ou NR⁶, où R⁶ représente un atome d'hydrogène ou un groupe alkyle en C₁-C₄ ; ou
A-Y représente une liaison chimique ou CH₂ ; et
Z représente un radical de formules Z¹ ou Z² ; 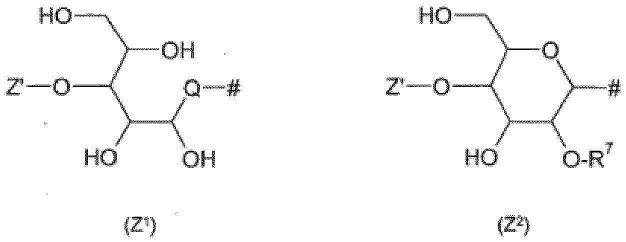 dans lesquelles
Q représente C(O) ou CH₂
Z' représente un atome d'hydrogène ou un radical de monosaccharide ou d'oligosaccharide et
R⁷ représente un atome d'hydrogène ou le groupe méthyle ;

15. Dispersion aqueuse de polymère selon l'une quelconque des revendications 13 et 14, dans laquelle les monomères M comprennent au moins un monomère M3 à insaturation monoéthylénique, comportant au moins un groupe carboxylate ou carboxamido, le monomère M3 étant choisi parmi des acides monocarboxyliques en C₃-C₈ à insaturation monoéthylénique et les amides primaires d'acides monocarboxyliques en C₃-C₈ à insaturation monoéthylénique.

16. Dispersion aqueuse de polymère selon l'une quelconque des revendications 13 à 15, dans laquelle les monomères M comprennent en outre au moins un monomère M4 qui est choisi parmi des esters hydroxyalkyliques en C₂-C₄ d'acides monocarboxyliques en C₃-C₈ à insaturation monoéthylénique, des monoesters d'acides carboxyliques en C₃-C₈ à insaturation monoéthylénique avec des éthers polyoxyalkyléniques en C₂-C₄ et des monomères à insaturation monoéthylénique comportant au moins un groupe urée.

17. Dispersion aqueuse de polymère selon l'une quelconque des revendications 13 à 16, dans laquelle le diamètre moyen de particule des particules de polymère, déterminé par diffusion de la lumière selon ISO 13321, se situe dans la plage de 0,03 à 1,5 µm.

18. Utilisation d'une composition de liant selon l'une quelconque des revendications 1 à 11, dans des produits de revêtement, des adhésifs, des matières d'étanchéité, dans des encres d'impression, dans la fabrication de non-tissés consolidés avec des polymères, ou pour la modification de liants inorganiques à prise hydraulique.
